# EUROPEAN PATENT APPLICATION

(11) **EP 4 726 968 A1**
(43) Date of publication of application: **15.04.2026**
(21) Application number: 24839882.8
(22) Date of filing: 07.05.2024
(51) Int. Cl.: H02J 50/40, H02J 50/90, H02J 50/10, G06F 3/0354, G06F 3/041, H04M 1/02, H02J 7/00, H01M 10/44

(54) **ELECTRONIC DEVICE AND ELECTRONIC PEN CHARGING METHOD USING SAME**

(30) Priority: 11.07.2023 KR 20230089909; 19.09.2023 KR 20230124991
(71) Applicant: Samsung Electronics Co., Ltd., Suwon-si, Gyeonggi-do 16677 (KR)
(72) Inventor: YOO, Wonwoo, Suwon-si, Gyeonggi-do 16677 (KR); KIM, Jeongseob, Suwon-si, Gyeonggi-do 16677 (KR); LEE, Sangyup, Suwon-si, Gyeonggi-do 16677 (KR); HAN, Junhee, Suwon-si, Gyeonggi-do 16677 (KR)
(74) Representative: Gulde & Partner
(86) International application number: PCT/KR2024/006100
(87) International publication number: WO 2025/014065

(57) **Abstract**

According to various embodiments of the presnet disclosure, an electronic device may comprise: a first charging circuit; a second charging circuit; memory for storing instructions; and a processor. According to an emboidment, the instructions, when executed by the proecssor, may cause the electronic device to transmit a signal for detecting the proximity of a charging coil of an electronic pen through the first charging circuit and the second charging circuit. According to an embodiment, the instructions, when executed by the processor, may cause the electronic device to identify one charging circuit having detected the proximity of the charging coil of the electronic pen between the first charging circuit and the second charging circuit. According to an embodiment, the instructions, when executed by the processor, may cause the electronic device to wirelessly transmit power to the electronic pen through the identified one charging circuit. According to an embodiment, the instructions, when executed by the processor, may cause the electronic device to stop transmitting the signal of the other charging circuit of the first charging circuit and the second charging circuit while wirelessly transmitting the power to the electronic pen through the identified one charging circuit. In addition to various embodiments disclosed in the present document, various other embodiments may be possible.

## Description

### [Technical Field]

The disclosure relates to an electronic device and a method of charging an electronic pen using the same.

### [Background Art]

Electronic devices such as smartphones, tablet PCs, and computers are becoming multifunctional. For example, as the screen of the electronic device expands, the usability of an electronic pen may increase. For example, the electronic pen may be mounted in an internal space or attached to the outside of the electronic device, and may wirelessly receive power from the electronic device to charge a battery.

The electronic device may include a display having a separate component (for example, a digitizer panel) for recognizing an input of the electronic pen. For example, a digitizer may include a plurality of signal channels. Some of the plurality of signal channels may be used as signal channels for detecting the electronic pen. For example, some of the plurality of signal channels may be connected to a charging circuit of the electronic device, and the electronic device may detect attachment or removal (or separation) of the electronic pen through a signal transmitted through the charging circuit.

The above-described information may be provided as the related art to help for understanding of the disclosure. No determination has been made and no assertion is made, as to whether any of the above might be applicable as prior art with regard to the disclosure.

### [Disclosure of Invention]

### [Technical Problem]

However, when a charging circuit for detecting and/or charging an electronic pen is further included, the number of signal channels for detecting an input of the electronic pen on a digitizer panel is relatively reduced, and thus accurate recognition of the electronic pen may be not possible. Further, as the charging circuit is further included, the electronic device should always perform an operation of transmitting a signal for detecting the electronic pen through a plurality of charging circuits, so that current consumption of the electronic device may increase.

An electronic device according to an embodiment of the disclosure may perform control to transmit a signal for detecting mounting of an electronic pen on the electronic device through a plurality of charging circuits, wirelessly transmit power to the electronic pen through one charging circuit detecting the mounting of the electronic pen among the plurality of charging circuits, and control the other charging circuit stop transmitting the signal for detecting the mounting of the electronic pen.

### [Solution to Problem]

According to an embodiment of the disclosure, the electronic device may include a first charging circuit, a second charging circuit, memory storing instructions, and a processor. According to an embodiment, the instructions may cause, when executed by the processor, the electronic device to transmit a signal for detecting proximity of a charging coil of the electronic pen through the first charging circuit and the second charging circuit. According to an embodiment, the instructions may cause, when executed by the processor, the electronic device to identify one charging circuit detecting the proximity of the charging coil of the electronic pen among the first charging circuit and the second charging circuit. According to an embodiment, the instructions may cause, when executed by the processor, the electronic device to wirelessly transmit power to the electronic pen through the one identified charging circuit detecting the proximity of the charging coil of the electronic pen. According to an embodiment, the instructions may cause, when executed by the processor, the electronic device to control the other charging circuit among the first charging circuit and the second charging circuit stop transmitting the signal while the power is wirelessly transmitted to the electronic pen through the one identified charging circuit.

According to an embodiment of the disclosure, a method of charging an electronic pen by an electronic device may include transmitting a signal for detecting proximity of a charging coil of an electronic pen through a first charging circuit and a second charging circuit. According to an embodiment, the method of charging the electronic pen by the electronic device may include identifying one charging circuit detecting the proximity of the charging coil of the electronic pen among the first charging circuit and the second charging circuit. According to an embodiment, the method of charging the electronic pen by the electronic device may include wirelessly transmitting power to the electronic pen through the one identified charging circuit detecting the proximity of the charging coil of the electronic pen. According to an embodiment, the method of charging the electronic pen by the electronic device may include controlling the other charging circuit among the first charging circuit and the second charging circuit to stop transmitting the signal while wirelessly transmitting the power to the electronic pen through the one identified charging circuit.

According to an embodiment of the disclosure, a non-transitory computer-readable storage medium (or a computer program product) storing one or more programs may be described. One or more programs according to an embodiment may include instructions that, when executed by a processor of an electronic device, transmit a signal for detecting proximity of a charging coil of an electronic pen through a first charging circuit and a second charging circuit. One or more programs according to an embodiment may include instructions that, when executed by a processor of an electronic device, identify one charging circuit detecting the proximity of the charging coil of the electronic pen among the first charging circuit and the second charging circuit. One or more programs according to an embodiment may include instructions that, when executed by a processor of an electronic device, wirelessly transmit power to the electronic pen through the one identified charging circuit detecting the proximity of the charging coil of the electronic pen. One or more programs according to an embodiment may include instructions that, when executed by a processor of an electronic device, control the other charging circuit among the first charging circuit and the second charging circuit to stop transmitting the signal while wirelessly transmitting the power to the electronic pen through the one identified charging circuit.

### [Advantageous Effects of Invention]

An electronic device according to an embodiment of the disclosure controls a charging circuit, which did not detect mounting of an electronic pen, among a plurality of charging circuits to stop transmitting a signal for detecting mounting of the electronic pen, thereby reducing current consumption of the electronic device. The electronic device controls the charging circuit, which did not detect the mounting of the electronic pen, to stop transmitting the signal for detecting the mounting of the electronic pen, so as to use some signal channels connected to the charging circuit, which did not detect the mounting the electronic pen, among a plurality of signal channels constituting a digitizer panel for detecting an input of the electronic pen, thereby accurately recognizing the electronic pen.

### [Brief Description of Drawings]

FIG. 1 is a block diagram of an electronic device within a network environment according to an embodiment of the disclosure.
FIG. 2 is a front perspective view of the electronic device according to an embodiment of the disclosure.
FIG. 3 is a rear perspective view of the electronic device of FIG. 2 and is a diagram illustrating a state in which an electronic pen is mounted on the electronic device according to an embodiment of the disclosure.
FIG. 4 is a rear perspective view of the electronic device of FIG. 2 and is a diagram illustrating a state in which the electronic pen is removed from the electronic device according to an embodiment of the disclosure.
FIG. 5 is a block diagram illustrating the electronic device according to an embodiment of the disclosure.
FIG. 6 is a block diagram illustrating the electronic pen according to an embodiment of the disclosure.
FIG. 7A is a flowchart illustrating a method of charging the electronic pen of the electronic device according to an embodiment of the disclosure.
FIG. 7B is a flowchart illustrating the method of charging the electronic pen by the electronic device according to an embodiment of the disclosure.
FIG. 8 is a diagram illustrating the signal flow between the electronic device and the electronic pen according to an embodiment of the disclosure.
FIG. 9 is a diagram illustrating a first charging circuit and a second charging circuit according to an embodiment of the disclosure.
FIG. 10 is a diagram illustrating a state in which the electronic pen is mounted on a pen seating portion according to an embodiment of the disclosure.
FIG. 11 is a graph illustrating a waveform of the current according to operations of the first charging circuit and the second charging circuit according to an embodiment of the disclosure.
FIG. 12 is a graph illustrating the current according to operations of the first charging circuit and the second charging circuit according to an embodiment of the disclosure.
FIG. 13 is a diagram illustrating a first pen seating portion and a second pen seating portion according to an embodiment of the disclosure.
FIG. 14 is a diagram illustrating a state in which a first electronic pen and a second electronic pen are mounted on the first pen seating portion and the second pen seating portion, respectively, according to an embodiment of the disclosure.
FIG. 15A is a flowchart illustrating a method of charging the second electronic pen by the electronic device according to an embodiment of the disclosure.
FIG. 15B is the flowchart illustrating the method of charging the second electronic pen by the electronic device according to an embodiment of the disclosure.
FIGs. 16A and 16B are diagrams illustrating the signal flow between the electronic device, the first electronic pen, and the second electronic pen according to an embodiment of the disclosure.
FIG. 17 is a diagram illustrating a first charging circuit, a second charging circuit, a third charging circuit, and a fourth charging circuit according to an embodiment of the disclosure.
FIG. 18 is a flowchart illustrating a method of controlling charging of the first electronic pen and the second electronic pen according to an embodiment of the disclosure.
FIGs. 19A and 19B are graphs illustrating the current according to the charging control of the first electronic pen and the second electronic pen according to an embodiment of the disclosure.
FIG. 20 is a diagram illustrating a user interface which configures whether to charge the first electronic pen and the second electronic pen according to an embodiment of the disclosure.

### [Mode for the Invention]

Hereinafter, embodiments of the disclosure will be described in detail with reference to the drawings to be easily implemented by those skilled in the art to which the disclosure belongs. However, the disclosure may be implemented in various different types and is not limited to the embodiments described herein. In connection with description of the drawings, the same or similar reference numerals may be used for the same or similar components. Further, in the drawings and related description, description for well-known functions and configurations may be omitted for clarity and simplicity.

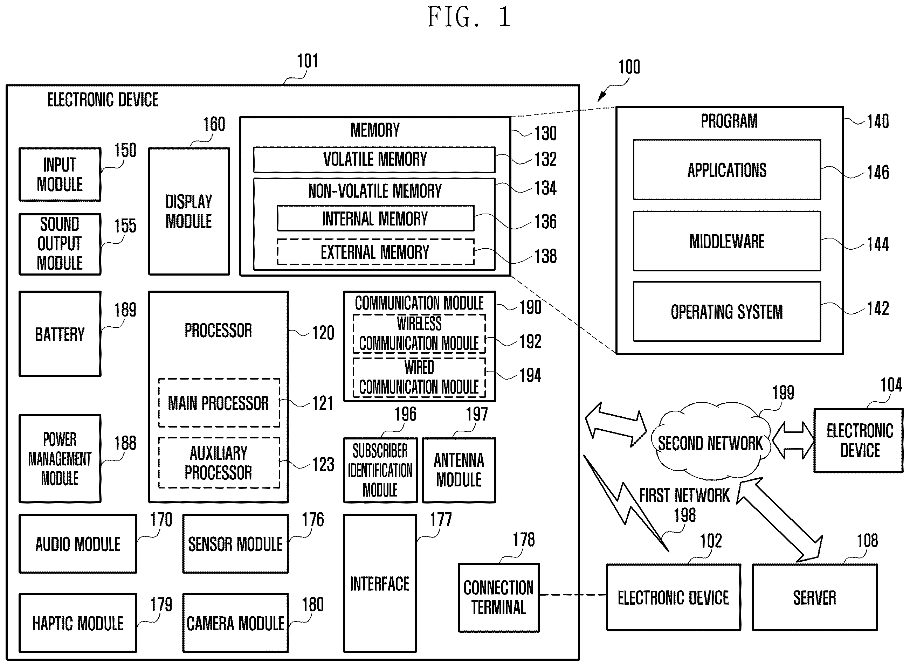

FIG. 1 is a block diagram illustrating an electronic device 101 in a network environment 100 according to various embodiments.

Referring to FIG. 1, an electronic device 101 in a network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connection terminal 178, a haptic module 179, a camera module 180, a power management module 188, a battery 189, a communication module 190, a subscriber identification module (SIM) 196, or an antenna module 197. In some embodiments, at least one of the components (e.g., the connection terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134. The non-volatile memory 134 may include an internal memory 136 and/or an external memory 138.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) (e.g., speaker or headphone) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., through wires) or wirelessly. According to an embodiment, the interface 177 may include, for example, a high-definition multimedia interface (HDMI), a universal serial bus (USB) interface, a secure digital (SD) card interface, or an audio interface.

The connection terminal 178 may include a connector via which the electronic device 101 may be physically connected with the external electronic device (e.g., the electronic device 102). According to an embodiment, the connection terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., an application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, Wi-Fi direct, or infrared data association (IrDA)) or the second network 199 (e.g., a long-range communication network, such as a legacy cellular network, a fifth generation (5G) network, a next-generation communication network, the Internet, or a computer network (e.g., LAN or wide area network (WAN))). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large-scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., an mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

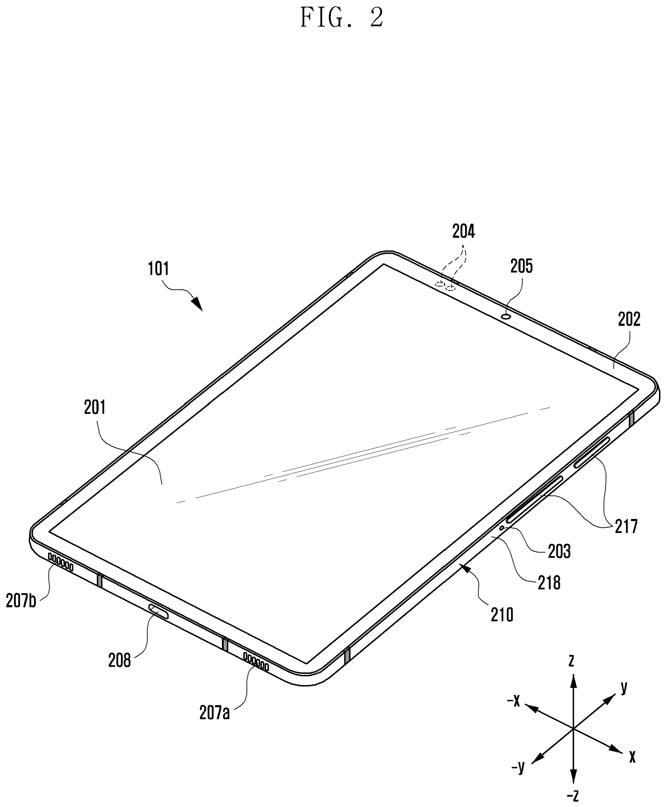

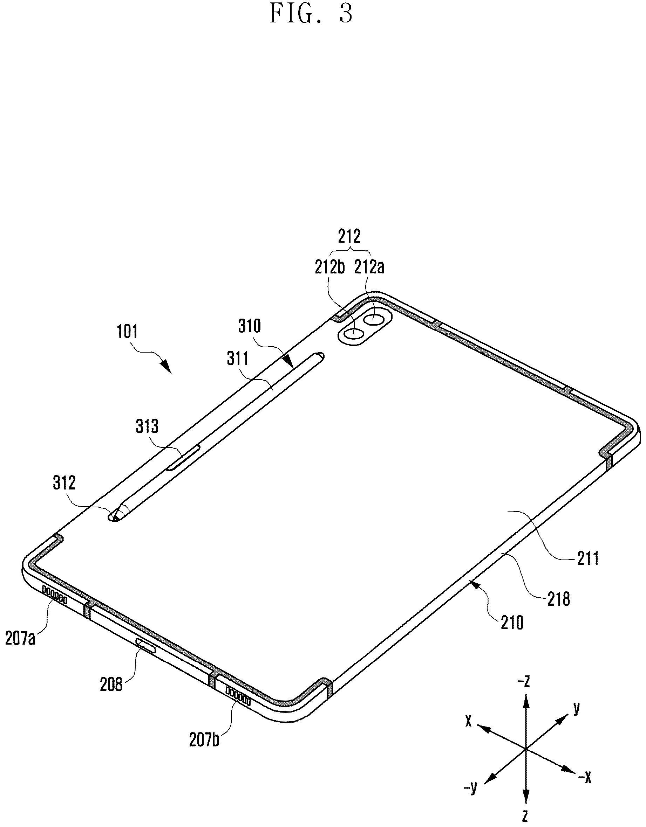

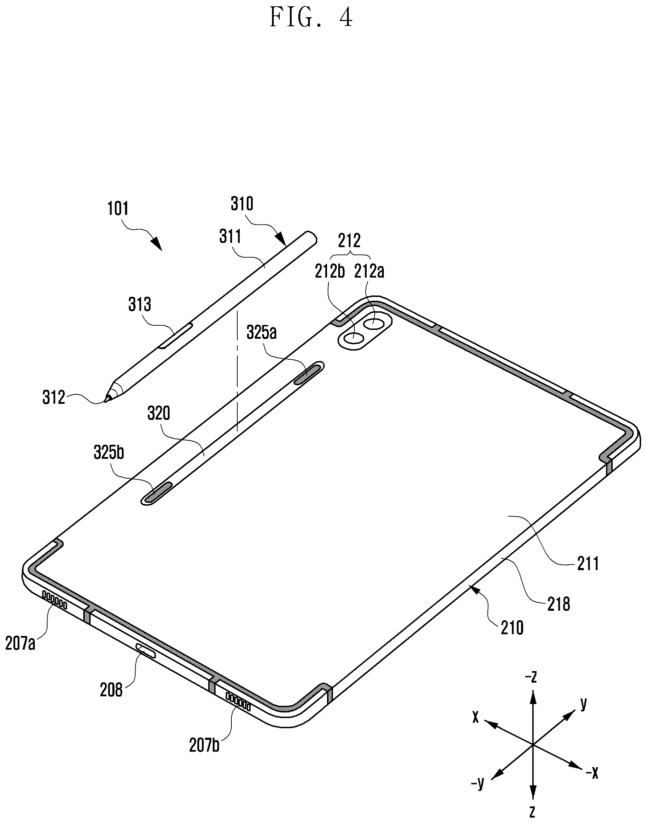

FIG. 2 is a front perspective view of an electronic device 101 according to certain embodiments. FIG. 3 is a rear perspective view of the electronic device of FIG. 2 in a state where an electronic pen 310 is mounted on the electronic device 101 according to certain embodiments. FIG. 4 is a rear perspective view of the electronic device 101 of FIG. 2 in a state where an electronic pen 310 is detached from the electronic device according to certain embodiments.

Referring to FIGS. 2, 3, and 4, the electronic device 101 may include a housing 210 that includes a front plate 202 facing a first direction (i.e., a positive direction of the Z-axis), a rear plate 211 facing a direction (i.e., a negative direction of the Z-axis) opposite to the first direction, and a lateral member 218 surrounding an inner space defined between the front plate 202 and the rear plate 211. The front plate 202 (e.g., a glass plate or polymer plate coated with a variety of coating layers) at least a part of which is substantially transparent. The rear plate 211 may be formed of, for example, coated or colored glass, ceramic, polymer, metal (e.g., aluminum, stainless steel (STS), or magnesium), or any combination thereof. The lateral member 218 may be combined with the front plate 202 and the rear plate 211, and may further include a metal and/or polymer. The rear plate 211 and the lateral member 218 may be integrally formed and may be formed of the same material (e.g., a metallic material such as aluminum).

The electronic device 101 may include a display 201 (e.g., display module 160 of FIG. 1), audio modules 203, 207a, and 207b (e.g., an audio module 170 of FIG. 1), a sensor module 204 (e.g., a sensor module 176 of FIG. 1), camera modules 205 and 212(212a and 112b) (e.g., a camera module 180 of FIG. 1), a key input device 217 (e.g., an input device 150 of FIG. 1), and/or a connector hole 208. In some embodiments, the electronic device 101 may omit at least one of the above-listed components (e.g., the key input device 217) or further include any other component.

The display 201 may be exposed through a considerable portion of the front plate 202. In another embodiment, the display 201 may be exposed through the substantially entire area of front plate 202. In still another embodiment, edges and corners of the display 201 may be formed to substantially resemble adjacent outlines of the front plate 202. In yet another embodiment, in order to expand an exposed area of the display 201, a gap between edges of the display 201 and corresponding edges of the front plate 202 may be substantially consistent across the seam between the display 201 and the front plate 202.

In further another embodiment, a recess or opening may be formed in a portion of a display area of the display 201 to accommodate at least one of the sensor module 204 and the camera module 205. At least one of the sensor module 204, the camera module 205, and a fingerprint sensor (not shown) may also be disposed on the back of the display area of the display 201.

The display 201 may be combined with, or disposed adjacent to, a touch sensing circuit, a pressure sensor capable of measuring the touch strength (pressure), and/or a digitizer for detecting a magnetic field type stylus pen.

The audio modules 203, 207a and 207b may correspond to a microphone hole 203 and speaker holes 207a and 107b, respectively. The microphone hole 203 may house a microphone disposed therein for acquiring external sounds and, in an embodiment, include a plurality of microphones to detect a sound directionality. The speaker holes 207a and 207b may include an external speaker hole and/or a call receiver hole. The microphone hole 203 and the speaker holes 207a and 207b may be implemented as a single hole, or a speaker (e.g., a piezo speaker) may be provided without the speaker holes 207a and 207b.

The sensor module 204 may generate an electrical signal or data value corresponding to an internal operating state or external environmental state of the electronic device 101. The sensor module 204 may include at least one of a gesture sensor, a gyro sensor, a barometric sensor, a magnetic sensor, an acceleration sensor, a grip sensor, a color sensor, an infrared (IR) sensor, a biometric sensor, a temperature sensor, a humidity sensor, or an illuminance sensor.

The camera modules 205 and 212 (e.g., which may in turn include 212a and 112b) may include a first camera module 205 disposed to be visually exposed to the external environment through the front plate 202 of the electronic device 101, and second camera module 212(212a and 112b) visually disposed to be external environment to the outside through the rear plate 211. According to an embodiment, the camera modules 205 and 212 may include one or a plurality of lenses, an image sensor, and/or an image signal processor. According to an embodiment, the rear camera modules 212a and 212b may be disposed adjacent to each other, and may thus be considered as one single camera module assembly 212. For example, a pair of the camera modules 212a and 212b in the camera module assembly 212 may perform a multiple camera functions, such as, for example general shooting, wide-angle shooting, and/or ultra-wide-angle shooting.

The key input device 217 may be disposed through the lateral member 218 of the housing 210. In a certain embodiment, some or all of the key input device 217 may be implemented in the form of a soft key displayed on the display 201. In another embodiment, the key input device 217 may be implemented using a pressure sensor included in the display 201. In still another embodiment, the key input device 217 may include at least one pressure-sensitive key (e.g., via a strain gauge) disposed in the electronic device 101, which may be capable of detecting pressure changes for pressure applied to the lateral member 218.

According to an embodiment, the connector hole 208 may accommodate a connector (e.g., a USB connector or an IF connector) for transmitting and receiving power, data, and/or sound signals to and from an external electronic device (e.g., the electronic devices 102 and 104, the server 108 of FIG. 1).

In an embodiment, a rear plate 211 of the electronic device 101 may include a pen seating portion 320 provided to mount an electronic pen 310 in at least a partial area. The electronic device 101 may further include charging circuits (for example, a first charging circuit 325a and a second charging circuit 325b) for charging a battery of the mounted electronic pen 310 disposed to correspond to at least a partial area of the pen seating portion 320.

In an embodiment, the electronic pen 310 may be disposed to be mountable to the pen seating portion 320 provided in at least a partial area of the rear plate 211 of the electronic device 101. In an embodiment, the electronic pen 310 may include a hollow pen housing 311 formed to extend from one end to another end, and a pen tip 312 disposed at the one end of the pen housing 311. The electronic pen 310 may include a coil member for electromagnetic induction and/or wireless charging, and may charge a battery (not shown) through the charging circuit (for example, the first charging circuit 325a or the second charging circuit 325b) disposed to correspond to at least the partial area of the pen seating portion 320 of the electronic device 101 by using the coil member. For example, the coil member is located within the pen housing 311, and may be implemented in an electromagnetic induction type and extend from one end to another end.

In an embodiment, the electronic pen 310 may include an electro-magnetic resonance (EMR) type, an active electrical stylus (AES) type, or an electric coupled resonance (ECR) type. The pen tip 312 may include electrodes,, and an input location of the electronic pen 310 on the display 201 may be detected based on a change in capacitance within a digitizer panel (not shown) by approach to the electrodes. In an embodiment, the electronic pen 310 may include a button 313 disposed in at least a partial area of the pen housing 311. In an embodiment, the electronic pen 310 may be mounted on the pen seating portion 320 by using magnetic force of a magnet. In an embodiment, the electronic pen 310 may include a battery (not shown) disposed inside the pen housing 311 and used for short-range wireless communication (for example, Bluetooth low energy (BLE) communication).

In various embodiments, it is described that the electronic pen 310 is mounted on the pen seating portion 320 provided in the partial area of the rear plate 211 of the electronic device 101, but is not limited thereto. For example, although not illustrated, the pen seating portion may be provided in a partial area of the side member 218 of the electronic device 101. The electronic pen 310 may be mounted on the pen seating portion provided in the partial area of the side member 218 of the electronic device. In another example, the electronic device 101 may include a plurality of pen seating portions. For example, a first pen seating portion 320 provided in the partial area of the rear plate 211 of the electronic device 101 and a second pen seating portion (not shown) provided in the partial area of the side member 218 of the electronic device 101 may be included. As the electronic device 101 includes the plurality of pen seating portions, a plurality of electronic pens may be mounted on the plurality of pen seating portions.

In an embodiment, the electronic device 101 may further include charging circuits (for example, a third charging circuit and a fourth charging circuit) disposed to correspond to at least a partial area of the second pen seating portion and configured to charge the battery of the electronic pen 310 (or the second electronic pen) mounted on the second pen seating portion.

In FIGs. 2 to 4 and description made below according to various embodiments, it is described that the electronic device 101 includes an electronic device having a large display and the electronic pen is mounted on or removed from the electronic device, but is only a form factor of the electronic device and is not limited thereto. For example, the electronic device 101 may include a rollable electronic device or a foldable electronic device, and may be implemented in the form in which the electronic pen is mounted on or removed from the rollable electronic device or the foldable electronic device.

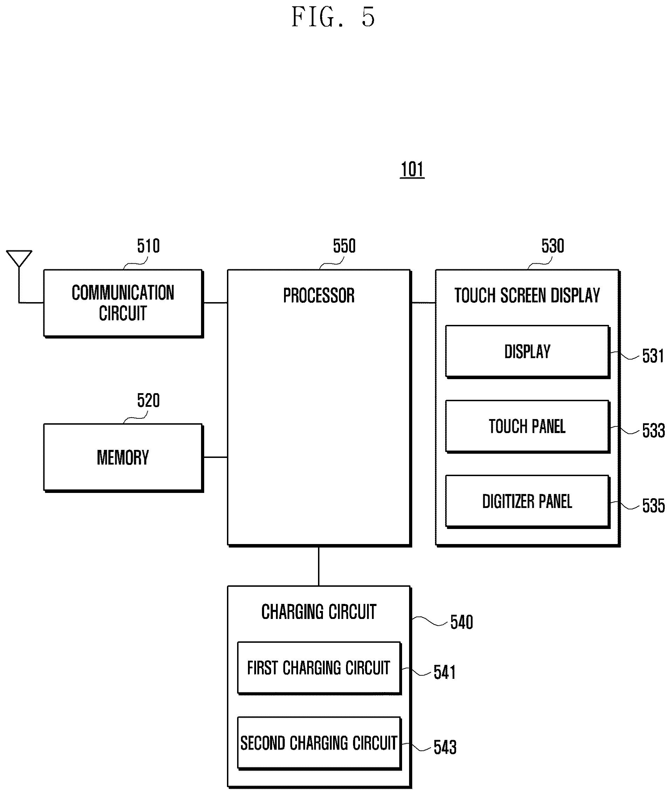

FIG. 5 is a block diagram illustrating the electronic device 101 according to an embodiment of the disclosure.

Referring to FIG. 5, an electronic device (for example, the electronic device 101 of FIG. 1) may include a communication circuit 510 (for example, the communication module 190 of FIG. 1), a memory 520 (for example, the memory 130 of FIG. 1), a touch screen display 530 (for example, the display module 160 of FIG. 1), a charging circuit 540, and/or a processor 550 (for example, the processor 120 of FIG. 1).

According to an embodiment of the disclosure, the communication circuit 510 (for example, the communication module 190 of FIG. 1) may connect communication with the electronic pen (for example, the electronic pen 310 of FIGs. 3 and 4). The communication circuit 510 may communicate with the communication circuit of the electronic pen 310 by using at least one of various short-range wireless communication schemes. For example, a short-range wireless communication scheme (for example, the first network 198 of FIG. 1) may include Bluetooth low energy (BLE) communication. However, the disclosure is not limited thereto.

According to an embodiment of the disclosure, the memory 520 (for example, the memory 130 of FIG. 1) may perform a function of storing a program (for example, the program 140 of FIG. 1) for processing and controlling the processor 550 of the electronic device 101, an operating system (OS) (for example, the operating system 142 of FIG. 1), various applications, and/or input/output data, and store a program for controlling the overall operation of the electronic device 101. The memory 520 may store various instructions that may be executed by the processor 550.

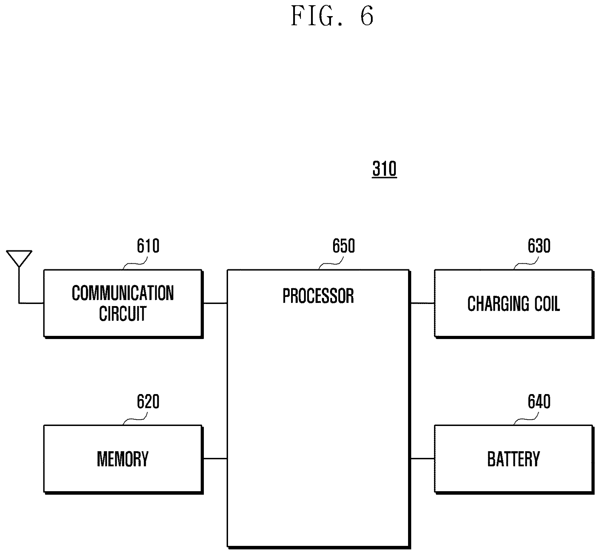

According to an embodiment, the memory 520 (for example, the memory 130 of FIG. 1) may store instructions for transmitting a signal (for example, a scan signal) for detecting proximity of a charging coil (for example, a charging coil 630 of FIG. 6) of the electronic pen 310 through a first charging circuit 541 and a second charging circuit 543 at predetermined time intervals. The memory 520 may store instructions for performing control to wirelessly transmit power to the electronic pen 310 through one charging circuit detecting proximity of the charging coil 630 of the electronic pen 310 among the first charging circuit 541 and the second charging circuit 543 and stop transmitting the signal for detecting proximity of the charging coil (for example, the charging coil 630 of FIG. 6) of the electronic pen 310 through the other charging circuit. The memory 520 may store instructions for, when it is detected that the charging coil 630 of the electronic pen 310 was in proximity to the one charging circuit and then is separated therefrom (for example, is not in proximity thereto), controlling the other charging circuit performing control to stop transmitting the signal for detecting proximity of the charging coil (for example, the charging coil 630 of FIG. 6) of the electronic pen 310 to resume transmission of the signal.

According to an embodiment of the disclosure, the touch screen display 530 (for example, the display module 160 of FIG. 1) may be implemented in an integral manner including a display 531, a touch panel 533, and a digitizer panel 535.

In an embodiment, the touch screen display 530 may display an image according to the control of the processor 550, and may be implemented as one of a liquid crystal display (LCD), a light-emitting diode (LED) display, a micro LED (µLED) display, an organic light-emitting diode (OLED) display, an active matrix organic light-emitting diode (AMOLED) display, a micro electro mechanical systems (MEMS) display, an electronic paper display, a flexible display, a foldable display, or a rollable display. However, the disclosure is not limited thereto.

In an embodiment, the display 531 may perform a function corresponding to a control signal according to an input of the electronic pen 310 according to the control of the processor 550 and display a user interface therefor. The display 531 may display charging states (for example, charging, a time expected to complete charging, and/or charging completion) of the electronic pen 310 according to the control of the processor 550. When mounting of the electronic pen 310 to the electronic device 101 or removal of the electronic pen 310 from the electronic device 101 is detected according to the control of the processor 550, the display 531 may display information indicating the mounting or removal of the electronic pen 310.

In an embodiment, the touch panel 533 may receive a touch, gesture, proximity, and/or hovering input using, for example, a user's body part (for example, hand).

In an embodiment, the digitizer panel 535 may detect an input of the electronic pen 310. For example, the digitizer panel 535 may detect a location, slope, and/or pressure of the electronic pen 310 on the touch screen display 530, based on a change in physical quantity (for example, a change in intensity of the magnetic field detected in a conductive pattern implemented on the digitizer panel 535) generated by proximity of the electronic pen 310 to the touch screen display 530.

According to an embodiment of the disclosure, the charging circuit 540 may include a first charging circuit 541 (for example, the first charging circuit 325a of FIG. 4) and a second charging circuit 543 (for example, the second charging circuit 325b of FIG. 4).

In an embodiment, the first charging circuit 541 and the second charging circuit 543 may be disposed to correspond to at least partial areas of the pen seating portion 320 of the electronic device 101. For example, the first charging circuit 541 and the second charging circuit 543 may be disposed to correspond to at least partial areas of the pen seating portion 320 in an internal space of the electronic device 101.

In an embodiment, the first charging circuit 541 may be connected to at least some channels among a plurality of channels constituting the digitizer panel 535. The second charging circuit 543 may be connected to at least some other channels among the plurality of channels constituting the digitizer panel 535. The first charging circuit 541 may transmit a signal (for example, a scan signal) for detecting the state in which the charging coil 630 of the electronic pen 310 is in proximity to the first charging circuit 541 by using at least some channels of the connected digitizer panel 535. The second charging circuit 543 may transmit a signal for detecting the state in which the charging coil 630 of the electronic pen 310 is in proximity to the second charging circuit 543 by using at least some other channels among the plurality of channels constituting the connected digitizer panel 535. The first charging circuit 541 or the second charging circuit 543 may detect the state in which the charging coil (for example, the charging coil 630 of FIG. 6) of the electronic pen 310 is proximity to the first charging circuit 541 or the second charging circuit 543. The charging circuit detecting the charging coil 630 of the electronic pen 310 among the first charging circuit 541 and the second charging circuit 543 may wirelessly transmit power to the electronic pen 310, so that the battery (for example, the battery 640 of FIG. 6) of the electronic pen 310 may be charged.

According to an embodiment of the disclosure, the processor 550 (for example, the processor 120 of FIG. 1) may include, for example, a micro controller unit (MCU), and may run an operating system (OS) or an embedded software program to control a plurality of hardware components connected to the processor 550. The processor 550 may control a plurality of hardware components according to, for example, instructions (for example, the program 140 of FIG. 1) stored in the memory 520.

In an embodiment, the processor 550 may transmit a signal (for example, a scan signal) for detecting proximity of the charging coil 630 of the electronic pen 310 through the first charging circuit 541 and the second charging circuit 543. The processor 550 may identify one charging circuit detecting proximity of the charging coil 630 of the electronic pen 310 among the first charging circuit 541 and the second charging circuit 543. For example, when the charging coil 630 of the electronic pen 310 is in proximity to the first charging circuit 541 or the second charging circuit 543, the current may flow through an internal circuit of the electronic pen 310 due to an electromagnetic induction phenomenon to form a signal of a resonance frequency. In response to the transmitted signal (for example, scan signal), the first charging circuit 541 or the second charging circuit 543 may receive (or recognize) the signal of the resonance frequency formed in the electronic pen 310 and detect a seated state of the electronic pen 310 in the pen seating portion 320 and a proximity state of the charging coil 630 of the electronic pen 310 to the first charging circuit 541 or the second charging circuit 543. The processor 550 may perform control to wirelessly transmit power to the electronic pen 310 through one charging circuit detecting proximity of the charging coil 630 of the electronic pen 310 and stop transmitting the signal (for example, scan signal) through the other charging circuit.

In an embodiment, the processor 550 may identify whether removal of the electronic pen 310 from the pen seating portion 320 is detected while wirelessly transmitting power to the electronic pen 310 through one charging circuit (for example, the charging circuit detecting proximity of the charging coil 630 of the electronic pen 310). For example, the processor 550 may transmit the signal (for example, scan signal) at predetermined time intervals through one charging circuit detecting proximity of the charging coil 630 of the electronic pen 310 even in the state where one charging circuit detecting proximity of the charging coil 630 of the electronic pen 310 among the first charging circuit 541 or the second charging circuit 543 wirelessly transmits power to the electronic pen 310. It is possible to identify whether removal of the electronic pen 319 from the pen seating portion 320 is detected by transmitting the signal through one charging circuit detecting proximity of the charging coil 630 of the electronic pen 310 at predetermined time intervals. For example, when no signal is received from the electronic pen 310 within a predetermined time in response to the signal transmitted through one charging circuit detecting proximity of the charging coil 630 of the electronic pen 310, the processor 550 may identify that removal (or separation) of the electronic pen 310 from the pen seating portion 320 is detected (separation state from the one charging circuit). When it is identified that removal of the electronic pen 310 from the pen seating portion 320 is detected, the processor 550 may control the other charging circuit stopping transmitting the signal among the first charging circuit 541 and the second charging circuit 543 to resume transmission of the signal. When the signal of the resonance frequency formed in the electronic pen 310 is recognized in response to the signal transmitted through one charging circuit detecting proximity of the charging coil 630 of the electronic pen 310, the processor 550 may identify that the charging coil 630 of the electronic pen 310 is still proximity to the one charging circuit (or the electronic pen 310 is seated in the pen seating portion 320).

In an embodiment, when it is identified that removal of the electronic pen 310 is not detected, the processor 550 may identify whether the battery 640 of the electronic pen 310 is in a fully-charged state. For example, the processor 550 may receive information related to the fully-charged state of the battery 640 of the electronic pen 310 from the electronic pen 310 and identify whether the battery 640 of the electronic pen 310 is in the fully-charged state, based thereon. When it is identified that the battery 640 of the electronic pen 310 is in the fully-charged state, the processor 550 may control one charging circuit wirelessly transmitting power among the first charging circuit 541 and the second charging circuit 543 to stop the operation of wirelessly transmitting power to the electronic pen 310. The processor 550 may transmit a signal (for example, scan signal) through the one charging circuit at predetermined time intervals even in the state where one charging circuit is controlled to stop the operation of wirelessly transmitting power to the electronic pen 310. For example, in order to identify whether removal of the electronic pen 310 from the pen seating portion 320 is detected, the processor 550 may transmit the signal through the one charging circuit at predetermined time intervals even in the state where the one charging circuit is controlled to stop the operation of wirelessly transmitting the electronic pen 310. When it is not identified that the battery 640 of the electronic pen 310 is in the fully-charged state, the processor 550 may continuously perform the operation of wirelessly transmitting power to the electronic pen 310 through one charging circuit.

The electronic device 101 according to an embodiment of the disclosure may include the first charging circuit 541, the second charging circuit 543, the memory 520 for storing instructions, and the processor 550. According to an embodiment, instructions may cause the electronic device 101, when executed by the processor 550, to transmit a signal for detecting proximity of the charging coil 630 of the electronic pen 310 through the first charging circuit 541 and the second charging circuit 543. According to an embodiment, the instructions may cause the electronic device 101, when executed by the processor 550, to identify one charging circuit detecting the proximity of the charging coil 630 of the electronic pen 310 among the first charging circuit 541 and the second charging circuit 543. According to an embodiment, the instructions may cause the electronic device 101, when executed by the processor 550, to wirelessly transmit power to the electronic pen 310 through the one identified charging circuit detecting the proximity of the charging coil 630. According to an embodiment, the instructions may cause, when executed by the processor 550, the electronic device 101 to make the other charging circuit among the first charging circuit 541 and the second charging circuit 543 stop transmitting the signal while wirelessly transmitting the power to the electronic pen 310 through the one identified charging circuit detecting the proximity of the charging coil 630.

The electronic device 101 according to an embodiment may further include a digitizer panel 535 including a plurality of channels.

In an embodiment, the first charging circuit 541 may be connected to first channels among a plurality of channels included in a digitizer panel 535.

In an embodiment, the second charging circuit 543 may be connected to second channels among the plurality of channels included in the digitizer panel 535.

In an embodiment, the one charging circuit detecting the proximity of the charging coil 630 may transmit the signal for detecting the proximity of the charging coil 630 of the electronic pen 310 at predetermined time intervals in a state in which the power is wirelessly transmitted to the electronic pen 310.

In an embodiment, the instructions may cause, when executed by the processor 550, the electronic device 101 to, when the proximity of the charging coil 630 of the electronic pen 310 is not detected while the signal for detecting the proximity of the charging coil 630 of the electronic pen 310 is transmitted at predetermined time intervals, make the other charging circuit resume transmission of the signal for detecting the proximity of the charging coil 630 of the electronic pen 310.

The electronic device 101 according to an embodiment may further include a front plate 202, a rear plate 211, and a side member 218 surrounding an internal space between the front plate 202 and the rear plate 211.

In an embodiment, a rear plate 211 of the electronic device 101 may include a pen seating portion 320 provided to make mounting of the electronic pen 310 in at least a partial area possible.

In an embodiment, the first charging circuit 541 may be disposed at a location physically adjacent to the charging coil 630 of the electronic pen 310 when a pen tip 312 of the electronic pen 310 is mounted on the pen seating portion 320 to face a first direction.

In an embodiment, the second charging circuit 543 may be disposed at a location physically adjacent to the charging coil 630 of the electronic pen 310 when the pen tip 312 of the electronic pen 310 is mounted on the pen seating portion 320 to face a second direction corresponding to a direction opposite to the first direction.

The electronic device 101 according to an embodiment may further include a third charging circuit 1315 and a fourth charging circuit 1320.

In an embodiment, a side member 218 of the electronic device 101 may include a second pen seating portion 1310 provided to make mounting of a second electronic pen 1410 in at least a partial area possible.

In an embodiment, a third charging circuit 1315 may be disposed at a location physically adjacent to a second charging coil of the second electronic pen 1410 when a pen tip of the second electronic pen 1410 is mounted on the second pen seating portion 1310 to face the first direction.

In an embodiment, a fourth charging circuit 1320 may be disposed at a location physically adjacent to a second charging coil of the second electronic pen 1410 when the pen tip of the second electronic pen 1410 is mounted on the second pen seating portion 1310 to face the second direction corresponding to the direction opposite to the first direction.

In an embodiment, the third charging circuit 1315 may be connected to third channels among the plurality of signal channels included in the digitizer panel 535.

In an embodiment, the fourth charging circuit 1320 may be connected to fourth channels among the plurality of signal channels included in the digitizer panel 535.

According to an embodiment, the instructions may cause, when executed by the processor 550, the electronic device 101 to transmit the signal for detecting the proximity of the second charging coil of the second electronic pen 1410 through the third charging circuit 1315 and the fourth charging circuit 1320. According to an embodiment, the instructions may cause, when executed by the processor 550, the electronic device 101 to identify one charging circuit detecting the proximity of the second charging coil of the second electronic pen 1410 among the third charging circuit 1315 and the fourth charging circuit 1320. According to an embodiment, the instructions may cause, when executed by the processor 550, the electronic device 101 to wirelessly transmit the power to the second electronic pen 1410 through the one charging circuit detecting the proximity of the second charging coil of the second electronic pen 1410. According to an embodiment, the instructions may cause, when executed by the processor 550, the electronic device 101 to make the other charging circuit among the third charging circuit 1315 and the fourth charging circuit 1320 to stop transmitting the signal while wirelessly transmitting the power to the second electronic pen 1410 through the one charging circuit detecting the proximity of the second charging coil of the second electronic pen 1410.

According to an embodiment, the instructions may cause, when executed by the processor 550, the electronic device 101 to identify a first remaining battery capacity of the electronic pen 310 and a second remaining battery capacity of the second electronic pen 1410. According to an embodiment, the instructions may cause, when executed by the processor 550, the electronic device 101 to, based on the first remaining battery capacity and the second remaining battery capacity, adjust charging rate of a charging circuit wirelessly transmitting power to the electronic pen 310 and a charging rate of a charging circuit wirelessly transmitting power to the second electronic pen 1410.

FIG. 6 is a block diagram illustrating the electronic pen 310 according to an embodiment of the disclosure.

Referring to FIG. 6, the electronic pen 310 may include a communication circuit 610, a memory 620, a charging coil 630, a battery 640, and/or a processor 650.

According to an embodiment of the disclosure, the communication circuit 610 may connect communication between the electronic pen 310 and an electronic device (for example, the electronic device 101 of FIG. 1). The communication circuit 610 may support a short-range wireless communication scheme. For example, the short-range wireless communication scheme may include Bluetooth low energy (BLE) communication. However, the disclosure is not limited thereto.

According to an embodiment of the disclosure, the memory 620 may store instructions for transmitting state information of the battery 640 (for example, the battery capacity, the remaining capacity of the battery, and/or the number of charging and discharging) of the electronic pen 310, based on a request from the electronic device 101 or a communication connection between the electronic device 101 and the communication circuit 610. The memory 620 may store instructions for transmitting state information (for example, a fully-charged state and/or temperature information) of the battery 640 to the electronic device 101 while the battery 640 is charged. As the electronic pen 310 is mounted on the electronic device 101, the memory 620 may store instructions for charging the battery 640 by using power wirelessly received from the electronic device 101.

According to an embodiment of the disclosure, the charging coil 630 may include a coil member for electromagnetic induction and/or wireless charging. Based on that the electronic pen 310 is mounted on the pen seating portion 320 of the electronic device 101, the charging coil 630 may wirelessly receive power through a charging circuit (for example, the first charging circuit 541 or the second charging circuit 543) disposed in the pen seating portion 320 to charge the battery 640.

According to an embodiment of the disclosure, the processor 650 may control the overall operation of the electronic pen 310 and the signal flow between internal components of the electronic pen 310.

In an embodiment, the processor 650 may transmit state information of the battery 640 of the electronic pen 310 to the electronic device 101 through the communication circuit 610. For example, the state information of the battery 640 may include the battery capacity, the remaining capacity of the battery, and/or the number of charging and discharging. However, the disclosure is not limited thereto.

In an embodiment, the processor 650 may charge the battery 640 by using power wirelessly received from the electronic device 101 (for example, a charging circuit (for example, the charging circuit 540 of FIG. 5) through the charging coil 630.

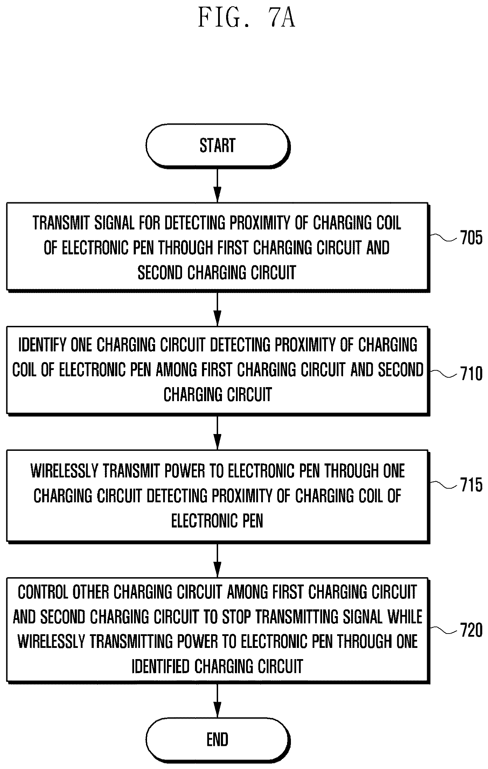

FIG. 7A is a flowchart illustrating a method of charging the electronic pen 310 of the electronic device 101 according to an embodiment of the disclosure.

In the following embodiment, respective operations may be sequentially performed but are not necessarily sequentially performed. For example, sequences of the respective operations may be changed, and at least two operations may be performed in parallel.

According to an embodiment, operation 705 to operation 720 may be understood as being performed by the electronic device (for example, a processor (for example, the processor 550 of FIG. 5) of the electronic device 101 of FIG. 1).

Referring to FIG. 7A, the processor 550 may transmit a signal for detecting proximity of a charging coil (for example, the charging coil 630 of FIG. 6) of an electronic pen (for example, the electronic pen 310 of FIGs. 3 and 4) through a first charging circuit (for example, the first charging circuit 541 of FIG. 5) and a second charging circuit (for example, the second charging circuit 543 of FIG. 5) in operation 705. For example, the signal for detecting proximity of the charging coil 630 of the electronic pen 310 may include a scan signal.

In an embodiment, the first charging circuit 541 and the second charging circuit 543 may be disposed in at least partial areas of a pen seating portion (for example, the pen seating portion 320 of FIG. 4) to charge a battery (for example, the battery 640 of FIG. 6) of the electronic pen 310 mounted on the pen seating portion 320. For example, the first charging circuit 541 may be disposed to correspond to one end of the pen seating portion 320. In another example, the first charging circuit 541 may be disposed in an internal space of the electronic device 101 to correspond to the one end of the pen seating portion 320. For example, the second charging circuit 543 may be disposed to correspond to another end of the pen seating portion 320. In another example, the second charging circuit 543 may be disposed in an internal space of the electronic device 101 to correspond to another end of the pen seating portion 320.

For example, when a pen tip (for example, the pen tip 312 of FIGs. 3 and 4) of the electronic pen 310 is mounted on the pen seating portion 320 to face a first direction (for example, a direction of the y axis in FIG. 4), the first charging circuit 541 may be disposed in the internal state of the electronic device 101 to correspond to the location physically adjacent to the charging coil 630 of the electronic pen 310. When the pen tip 312 of the electronic pen 310 is mounted on the pen seating portion 320 to face a second direction (for example, a direction opposite to the first direction (for example, the direction of the y axis)) (for example, a direction of the -y axis in FIG. 4), the second charging circuit 543 may be disposed in the internal state of the electronic device 101 to correspond to the location physically adjacent to the charging coil 630 of the electronic pen 310.

In an embodiment, a digitizer panel (for example, the digitizer panel 535 of FIG. 5) may be constituted by a plurality of channels for detecting an input of the electronic pen 310.

In an embodiment, the first charging circuit 541 may be connected to first channels (for example, at least some channels) among the plurality of channels constituting the digitizer panel 535. Among the plurality of channels constituting the digitizer panel 535, the first channels (for example, at least some channels) connected to the first charging circuit 541 may transmit the signal for detecting proximity of the charging coil 630 of the electronic pen 310.

In an embodiment, the second charging circuit 543 may be connected to second channels (for example, at least some other channels) among the plurality of channels constituting the digitizer panel 535. The second channels (for example, at least some other channels) connected to the second charging circuit 543 among the plurality of channels constituting the digitizer panel 535 may transmit the signal for detecting proximity of the charging coil 630 of the electronic pen 310.

In an embodiment, the processor 550 may identify one charging circuit detecting proximity of the charging coil 630 of the electronic pen 310 among the first charging circuit 541 and the second charging circuit 543 in operation 710.

In an embodiment, when the pen tip 312 of the electronic pen 310 is mounted on the pen seating portion 320 to face the first direction (for example, the direction of the y axis in FIG. 4), the charging coil 630 located within the pen housing 311 and expanding from one end to another end of the pen housing 311 may be in the proximity state to the first charging circuit 541. When the pen tip 312 of the electronic pen 310 is mounted on the pen seating portion 320 to face the first direction (for example, the direction of the y axis in FIG. 4) based thereon, the processor 550 may detect the state in which the charging coil 630 of the electronic pen 310 is proximity to the first charging circuit 541 through the first charging circuit 541 among the first charging circuit 541 and the second charging circuit 543.

In an embodiment, when the pen tip 312 of the electronic pen 310 is mounted on the pen seating portion 320 to face the second direction (for example, the direction opposite to the first direction (for example, the direction of the y axis in FIG. 4)) (for example, the direction of the -y axis in FIG. 4), the charging coil 630 of the electronic pen 310 may be in the proximity state to the second charging circuit 543. When the pen tip 312 of the electronic pen 310 is mounted on the pen seating portion 320 to face the second direction (for example, the direction of the -y axis in FIG. 4) based thereon, the processor 550 may detect the state in which the charging coil 630 of the electronic pen 310 is proximity to the second charging circuit 543 through the second charging circuit 543 among the first charging circuit 541 and the second charging circuit 543.

In an embodiment, when the charging coil 630 of the electronic pen 310 is in proximity to the first charging circuit 541 or the second charging circuit 543, the current may flow through an internal circuit of the electronic pen 310 due to an electromagnetic induction phenomenon to form a signal of a resonance frequency. The first charging circuit 541 or the second charging circuit 543 may detect the state in which the electronic pen 310 is mounted on the pen seating portion 320 and the state in which the charging coil 630 of the electronic pen 310 is in proximity to the first charging circuit 541 or the second charging circuit 543 by receiving (or recognizing) the signal of the resonance frequency formed in the electronic pen 310 in response to the transmitted signal (for example, the signal for detecting proximity of the charging coil 630 of the electronic pen 310).

In an embodiment, the processor 550 may wirelessly transmit power to the electronic pen 310 through one charging circuit detecting proximity of the charging coil 630 of the electronic pen 310 in operation 715.

In an embodiment, the processor 550 may receive the signal indicating proximity of the charging coil 630 of the electronic pen 310 from one charging circuit detecting proximity of the charging coil 630 of the electronic pen 310. Based on reception of the signal indicating the proximity of the charging coil 630 of the electronic pen 310 is detected, the processor 550 may control one charging circuit detecting the proximity of the charging coil 630 of the electronic pen 310 to transmit power to the electronic pen 310.

In an embodiment, the processor 550 may control the one charging circuit to transmit the signal (for example, the scan signal) even in the state in which the one charging circuit detecting the proximity of the charging coil 630 of the electronic pen 310 wirelessly transmit power to the electronic pen 310. For example, the signal (for example, the scan signal) may be transmitted at predetermined time intervals. For example, the processor 550 may periodically identify whether the charging coil 630 of the electronic pen 310 is separated from the one charging circuit (or the electronic pen 310 is in a removal (or separation) state from the pen seating portion 320) by control the one charging circuit to transmit the signal (for example, the scan signal) in the state in which the one charging circuit detecting proximity of the charging coil 630 of the electronic pen 310 wirelessly transmits power to the electronic pen 310.

In an embodiment, while power is wirelessly transmitted to the electronic pen 310 through the one identified charging circuit, the processor 550 may control the other charging circuit among the first charging circuit 541 and the second charging circuit 543 to stop transmitting the signal (for example, the signal for detecting proximity of the charging coil 630 of the electronic pen 310) in operation 720. For example, the processor 550 may control the other charging circuit to make the other charging circuit, which did not detect proximity of the charging coil 630 of the electronic pen 310, not transmit the signal for detecting proximity of the charging coil 630 of the electronic pen 310.

In an embodiment, since the proximity of the charging coil 630 of the electronic pen 310 is detected through one charging circuit and the battery 640 of the electronic pen 310 is charged using power wirelessly received through the one charging circuit, the operation of transmitting a signal for detecting proximity of the charging coil 630 of the electronic pen 310 of the other charging circuit, which did not detect the proximity of the charging coil 630 of the electronic pen 310, may not be needed. Based thereon, the processor 550 may prevent the unnecessary operation from being performed by controlling the other charging circuit to stop transmitting the signal for detecting proximity of the charging coil 630 of the electronic pen 310, so as to reduce power consumption of the electronic device 101.

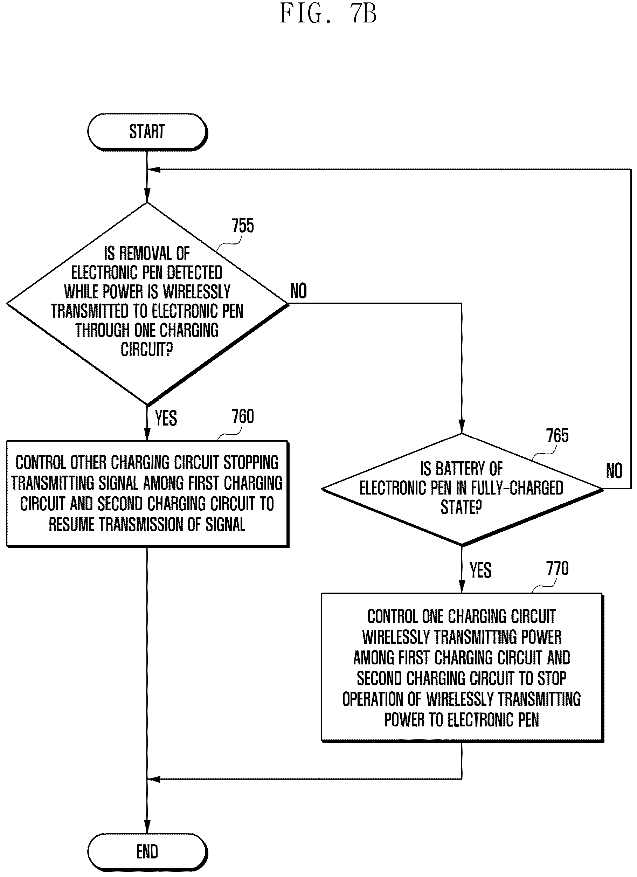

FIG. 7B is a flowchart illustrating a method of charging the electronic pen 310 of the electronic device 101 according to an embodiment of the disclosure.

In the following embodiment, respective operations may be sequentially performed but are not necessarily sequentially performed. For example, sequences of the respective operations may be changed, and at least two operations may be performed in parallel.

According to an embodiment, operation 755 to operation 770 may be understood as being performed by the electronic device (for example, the processor (for example, the processor 550 of FIG. 5) of the electronic device 101 of FIG. 1).

FIG. 7B according to various embodiments may be an additional operation of FIG. 7B described above.

Referring to FIG. 7B, the processor 550 may identify whether removal of the electronic pen 310 is detected while power is wirelessly transmitted to the electronic pen (for example, the electronic pen 310 of FIGs. 3 and 4) through one charging circuit in operation 755.

In an embodiment, the processor 550 may transmit a signal (for example, a scan signal) through one charging circuit detecting proximity of the charging coil 630 of the electronic pen 310 even in the state in which one charging circuit detecting proximity of a charging coil (for example, the charging coil 630 of FIG. 6) of the electronic pen 310 wirelessly transmits power to the electronic pen 310. For example, even in the state in which one charging circuit detecting proximity of the charging coil 630 of the electronic pen 310 wirelessly transmits power to the electronic pen 310, the operation for transmitting the signal through the one charging circuit detecting proximity of the charging coil 630 of the electronic pen 310 may be an operation for detecting the state in which the charging coil 630 of the electronic pen 310 is separated from the one charging circuit detecting proximity of the charging coil 630 of the electronic pen 310 (for example, non-proximity state) (or an operation for detecting the state in which the electronic pen 310 is removed (or separated) from a pen seating portion (for example, the pen seating portion 320 of FIG. 4)).

For example, when a signal of a resonance frequency (for example, a signal of a resonance frequency formed according to proximity of the electronic pen 310 to the one charging circuit) formed in the electronic pen 310 is recognized in response to the signal transmitted through the one charging circuit detecting proximity of the charging coil 630 of the electronic pen 310, the processor 550 may identify the state in which the charging coil 630 of the electronic pen 310 is still in proximity to the one charging circuit (or the electronic pen 310 is mounted on the pen seating portion 320).

In another example, when no signal is received from the electronic pen 310 within a predetermined time in response to the signal transmitted through one charging circuit detecting proximity of the charging coil 630 of the electronic pen 310, the processor 550 may identify that the charging coil 630 of the electronic pen 310 is in the separation state from the one charging circuit (or the state in which the electronic pen 310 is removed (or separated) from the pen seating portion 320.

In an embodiment, when it is identified that removal of the electronic pen 310 is detected (for example, YES of operation 755), the processor 550 may control the other charging circuit stopping transmitting the signal (for example, the signal for detecting proximity of the charging coil 630 of the electronic pen 310) among the first charging circuit (for example, the first charging circuit 541 of FIG. 5) and the second charging circuit (for example, the second charging circuit 543 of FIG. 5) to resume transmission of the signal in operation 760.

In an embodiment, according to removal of the electronic pen 310, it should be detected whether the electronic pen 310 is mounted or the charging coil (for example, the charging coil 630 of FIG. 6) of the electronic pen 310 is in the proximity state to the first charging circuit 541 or the second charging circuit 543, and thus the processor 550 may control the other charging circuit to allow the other charging circuit stopping transmitting the signal (for example, the signal for detecting proximity of the charging coil 630 of the electronic pen 310) to resume transmission of the signal.

In an embodiment, when it is identified that removal of the electronic pen 310 is not detected (for example, NO of operation 755), the processor 550 may identify whether a battery (for example, the battery 640 of FIG. 6) of the electronic pen 310 is in a fully-charged state in operation 765. For example, the processor 550 may receive information related to the fully-charged state of the battery 640 of the electronic pen 310 from the electronic pen 310 and identify whether the battery 640 of the electronic pen 310 is in the fully-charged state, based thereon.

In an embodiment, when it is identified that the battery 640 of the electronic pen 310 is in the fully-charged state (for example, YES of operation 765), the processor 550 may control one charging circuit wirelessly transmitting power among the first charging circuit 541 and the second charging circuit 543 to stop the operation of wirelessly transmitting power to the electronic pen 310 in operation 770.

In an embodiment, the processor 550 may transmit a signal (for example, a scan signal) through the one charging circuit at predetermined time intervals even in the state in which the one charging circuit is controlled to stop the operation of wirelessly transmitting power to the electronic pen 310. For example, in order to identify whether removal of the electronic pen 310 from the pen seating portion 320 is detected in the state in which the one charging circuit is controlled to stop the operation of wirelessly transmitting power to the electronic pen 310, the processor 550 may transmit the signal (for example, the scan signal) through the one charging circuit at predetermined time intervals.

In an embodiment, although not illustrated, as the one charging circuit stops the operation of wirelessly transmitting power, the electronic pen 310 may stop the operation of charging the battery 640 through the charging coil 630. When it is identified that the remaining capacity of the battery 640 measured after a predetermined time passes in the fully-charged state of the battery 640 is lower than a predefined value, the electronic pen 310 may transmit information (or a signal making a request for resuming charging) related to the remaining capacity of the battery 640 to the electronic device 101. Based on the information (or the signal making the request for resuming charging) related to the remaining capacity of the battery 640 received from the electronic pen 310, the processor 550 may control the one charging circuit to resume the operation of wirelessly transmitting power to the electronic pen 310.

In an embodiment, when it is not identified that the battery 640 of the electronic pen 310 is in the fully-charged state (for example, NO of operation 765), the processor 550 may proceed to operation 755 to perform the operation of wirelessly transmitting power to the electronic pen 310 through one charging circuit and identifying whether removal of the electronic pen 310 is detected.

In various embodiments, it has been described that whether to perform the operation in which the one charging circuit wirelessly transmits power to the electronic pen 310 is determined based on whether the battery 640 of the electronic pen 310 is in the fully-charged state, but is not limited thereto. For example, the processor 550 may receive temperature information of the electronic pen 310 (for example, temperature information of the electronic pen 310 and/or temperature information of the battery 640 of the electronic pen 310). In this case, when identifying that the temperature of the electronic pen 310 is higher than a predetermined temperature, the processor 550 may control one charging circuit, which wirelessly transmits power among the first charging circuit 541 and the second charging circuit 543, to stop the operation of wirelessly transmitting power to the electronic pen 310.

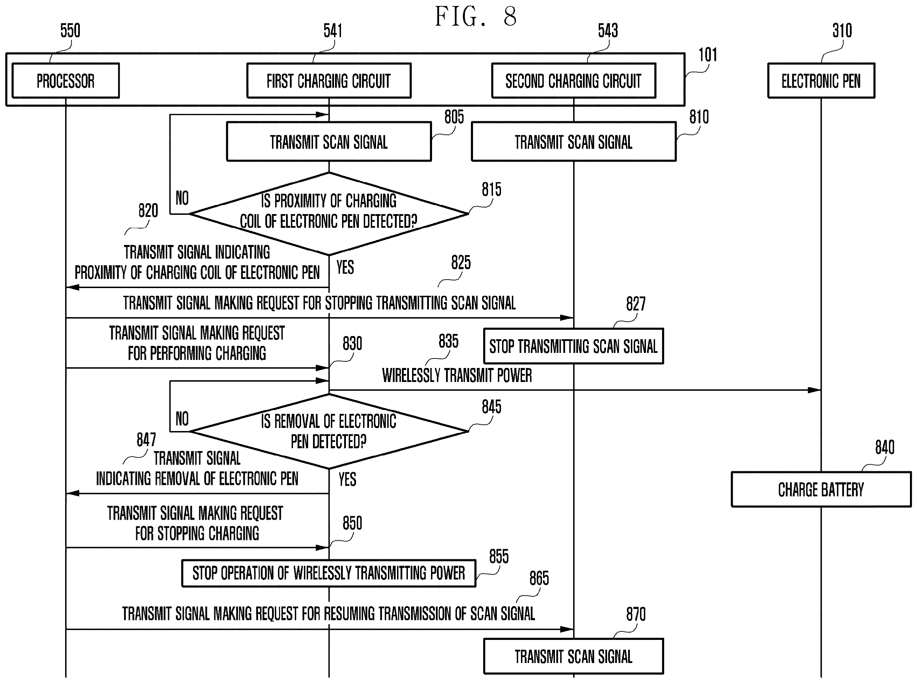

FIG. 8 is a diagram illustrating the signal flow between the electronic device 101 (for example, the processor 550, the first charging circuit 541, or the second charging circuit 543) and the electronic pen 310 according to an embodiment of the disclosure.

In the following embodiment, respective operations may be sequentially performed but are not necessarily sequentially performed. For example, sequences of the respective operations may be changed, and at least two operations may be performed in parallel.

In description of FIG. 8 according to various embodiments, it is assumed that, among a first charging circuit (for example, the first charging circuit 541 of FIG. 5) and a second charging circuit (for example, the second charging circuit 543 of FIG. 5), the first charging circuit 541 detects proximity of a charging coil (for example, the charging coil 630 of FIG. 6) of an electronic pen (for example, the electronic pen 310 of FIGs. 3 and 4).

Referring to FIG. 8, the first charging circuit 541 may transmit a scan signal in operation 805. The second charging circuit 543 may transmit the scan signal in operation 810. For example, the scan signal transmitted by the first charging circuit 541 and the second charging circuit 543 may be a signal for detecting proximity of the charging coil 630 of the electronic pen 310 (or a signal for detecting the state in which the electronic pen 310 is mounted on a pen seating portion (for example, the pen seating portion 320 of FIG. 4).

In an embodiment, the first charging circuit 541 may be connected at least some channels among a plurality of channels constituting the digitizer panel 535, and the second charging circuit 543 may be connected to at least some other channels among the plurality of channels constituting the digitizer panel 535. The first charging circuit 541 may transmit the scan signal through at least some channels of the digitizer panel 535, and the second charging circuit 543 may transmit the scan signal through at least some other channels of the digitizer panel 535.

In an embodiment, the first charging circuit 541 may identify whether proximity of the charging coil 630 of the electronic pen 310 is detected in operation 815.

In an embodiment, when a pen tip (for example, the pen tip 312 of FIGs. 3 and 4) of the electronic pen 310 is mounted on the pen seating portion 320 to face a first direction (for example, the direction of the y axis in FIG. 4), the charging coil 630 located within a pen housing (for example, the pen housing 311 of FIGs. 3 and 4) and extending from one end to another end of the pen housing 311 may be in a proximity state to the first charging circuit 541. When the charging coil 630 of the electronic pen 310 is in proximity to the first charging circuit 541, the current may flow through an internal circuit of the electronic pen 310 due to an electromagnetic induction phenomenon to form a signal of a resonance frequency. The first charging circuit 541 may detect the state in which the charging coil 630 of the electronic pen 310 is in proximity to the first charging circuit 541 by recognizing the signal of the resonance frequency formed in the electronic pen 310.

In an embodiment, although not illustrated, the second charging circuit 543 may also identify whether proximity of the charging coil 630 of the electronic pen 310 is detected. For example, when the pen tip 312 is mounted on the pen seating portion 320 to face a second direction (for example, a direction opposite to the first direction (for example, the direction of the y axis)) (for example, a direction of the -y axis in FIG. 4), the charging coil 630 located within the pen housing 311 and extending from one end to another end of the pen housing 311 may be in the proximity state to the second charging circuit 543. When the charging coil 630 of the electronic pen 310 is in proximity to the second charging circuit 543, the current may flow through an internal circuit of the electronic pen 310 due to an electromagnetic induction phenomenon to form a signal of a resonance frequency. The second charging circuit 543 may detect the state in which the charging coil 630 of the electronic pen 310 is in proximity to the second charging circuit 543 by recognizing the signal of the resonance frequency formed in the electronic pen 310.

In an embodiment, when proximity of the charging coil 630 of the electronic pen 310 is not detected (for example, NO of operation 815), the first charging circuit 541 may proceed to operation 805 and continuously perform the operation of transmitting the scan signal.

In an embodiment, when proximity of the charging coil 630 of the electronic pen 310 is detected (for example, YES of operation 815), the first charging circuit 541 may transmit a signal indicating proximity of the charging coil 630 of the electronic pen 310 to the processor 550 in operation 820. Based on reception of the signal indicating proximity of the charging coil 630 of the electronic pen 310 from the first charging circuit 541, the processor 550 may transmit a signal making a request for stopping transmitting the scan signal to the second charging circuit 543 in operation 825. Based on the signal making the request for stopping transmitting the scan signal received from the processor 550, the second charging circuit 543 may stop transmitting the scan signal in operation 827.

In an embodiment, the processor 550 may transmit a signal making a request for performing charging to the first charging circuit 541 in operation 830. The first charging circuit 541 may wirelessly transmit power to the electronic pen 310 in operation 835. The electronic pen 310 may charge a battery (for example, the battery 640 of FIG. 6) by using power wirelessly received from the first charging circuit 541 in operation 840.

In an embodiment, the first charging circuit 541 may identify whether removal of the electronic pen 310 is detected in operation 845. For example, the first charging circuit 541 may transmit the scan signal at predetermined time intervals while wirelessly transmitting power to the electronic pen 310. For example, the operation of transmitting the scan signal at predetermined time intervals while wirelessly transmitting power to the electronic pen 310 may be an operation for detecting the state in which the electronic pen 310 is removed (or separated) from the pen seating portion 320 (or an operation for detecting the state in which the charging coil 630 of the electronic pen 310 is separated from the first charging circuit 541 (for example, non-proximity state)).

In an embodiment, when no signal is received from the electronic pen 310 within a predetermined time in response to the transmitted scan signal, the first charging circuit 541 may detect the state in which the electronic pen 310 is removed (or separated) from the pen seating portion 320 (or the state in which the charging coil 630 of the electronic pen 310 is separated from the first charging circuit 541 (for example, non-proximity state)).

In an embodiment, when removal of the electronic pen 310 is not detected (for example, NO of operation 845), the first charging circuit 541 may proceed to operation 835 and may continuously performed the operation of wirelessly transmitting power to the electronic pen 310. For example, the operation of wirelessly transmitting power to the electronic pen 310 may be performed until information related to the fully-charged state of the battery 640 is received from the electronic pen 310. However, the disclosure is not limited thereto.

In an embodiment, when removal of the electronic pen 310 is detected (for example, YES of operation 845), the first charging circuit 541 may transmit a signal indicating removal of the electronic pen 310 to the processor 550 in operation 847. In operation 850, the processor 550 may transmit a signal making a request for stopping charging to the first charging circuit 541. Based on reception of the signal making the request for stopping charging from the processor, the first charging circuit 541 may stop the operation of wirelessly transmitting power to the electronic pen 310 in operation 855. Although not illustrated, as the first charging circuit 541 stops the operation of wirelessly transmitting power, the electronic pen 310 may stop (or end) the operation of charging the battery 640 through the charging coil 630.

In an embodiment, the processor 550 may transmit a signal making a request for resuming transmission of the scan signal to the second charging circuit 543 in operation 865. Based on reception of the signal making the request for resuming transmission of the scan signal from the processor 550, the second charging circuit 543 may transmit the scan signal in operation 870. For example, the second charging circuit 543 may identify whether proximity of the charging coil 630 of the electronic pen 310 is detected by resuming transmission of the scan signal stopped in operation 827. In other words, the processor 550 may transmit the scan signal through the first charging circuit 541 and the second charging circuit 543 by controlling the second charging circuit 543 to resume transmission of the scan signal. Based thereon, the processor 550 may identify whether the charging coil 630 of the electronic pen 310 is in proximity to the first charging circuit 541 or the second charging circuit 543.

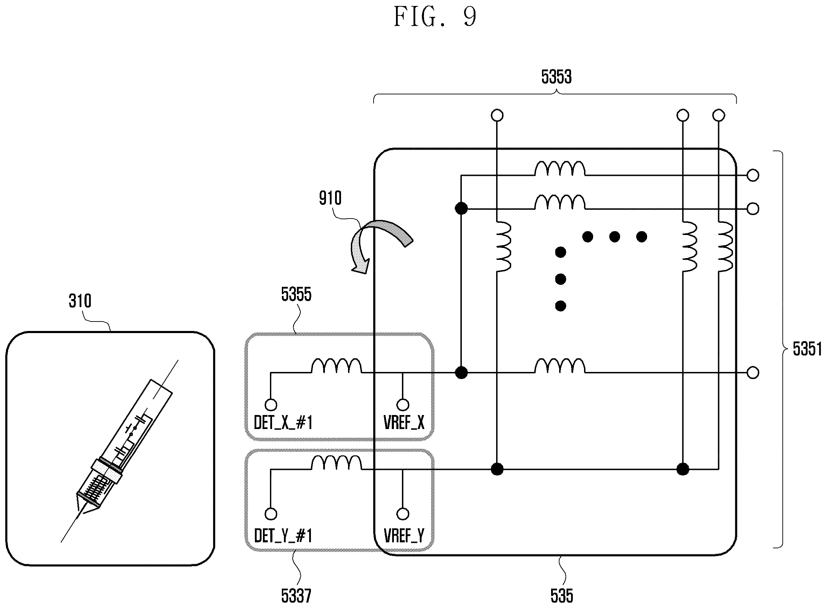

FIG. 9 is a diagram illustrating the first charging circuit 541 and the second charging circuit 543 according to an embodiment of the disclosure.

Referring to FIG. 9, a digitizer panel (for example, the digitizer panel 535 of FIG. 5) may be constituted by a plurality of channels. For example, the plurality of channels may include a plurality of X channel electrodes 5351 and a plurality of Y channel electrodes 5353. The plurality of X channel electrodes 5351 may operate by transmitter (TX) electrodes which apply driving signals. The plurality of Y channel electrodes 5353 may operate by receiver (RX) electrodes which receive driving signals applied from the plurality of X channel electrodes 5351.

In an embodiment, among the plurality of channels constituting the digitizer panel 535, some channels 5355 and 5357 may be used to detect proximity of a charging coil (for example, the charging coil 630 of FIG. 6) of an electronic pen (for example, the electronic pen 310 of FIGs. 3 and 4) (or detect a state in which the electronic pen 310 is mounted on a pen seating portion (for example, the pen seating portion 320 of FIG. 4). For example, some channels 5355 and 5357 among the plurality of channels may be allocated to a first charging circuit (for example, the first charging circuit 541 of FIG. 5) and a second charging circuit (for example, the second charging circuit 543 of FIG. 5) and used to detect proximity of the charging coil 630 of the electronic pen 310 (or detect the state in which the electronic pen 310 is mounted on the pen seating portion 320).

For example, at least some channels, for example, the first channels 5355 among the plurality of channels constituting the digitizer panel 535 may be connected to the first charging circuit 541. Based on transmission of a signal (for example, a scan signal) through the first channels 5355 of the digitizer panel 535, the first charging circuit 541 may detect whether the charging coil 630 of the electronic pen 310 is in proximity to the first charging circuit 541.

In another example, at least other some channels, for example, the second channels 5357 among the plurality of channels constituting the digitizer panel 535 may be connected to the second charging circuit 543. Based on transmission of a signal (for example, a scan signal) through the second channels 5357 of the digitizer panel 535, the second charging circuit 543 may detect whether the charging coil 630 of the electronic pen 310 is in proximity to the second charging circuit 543.

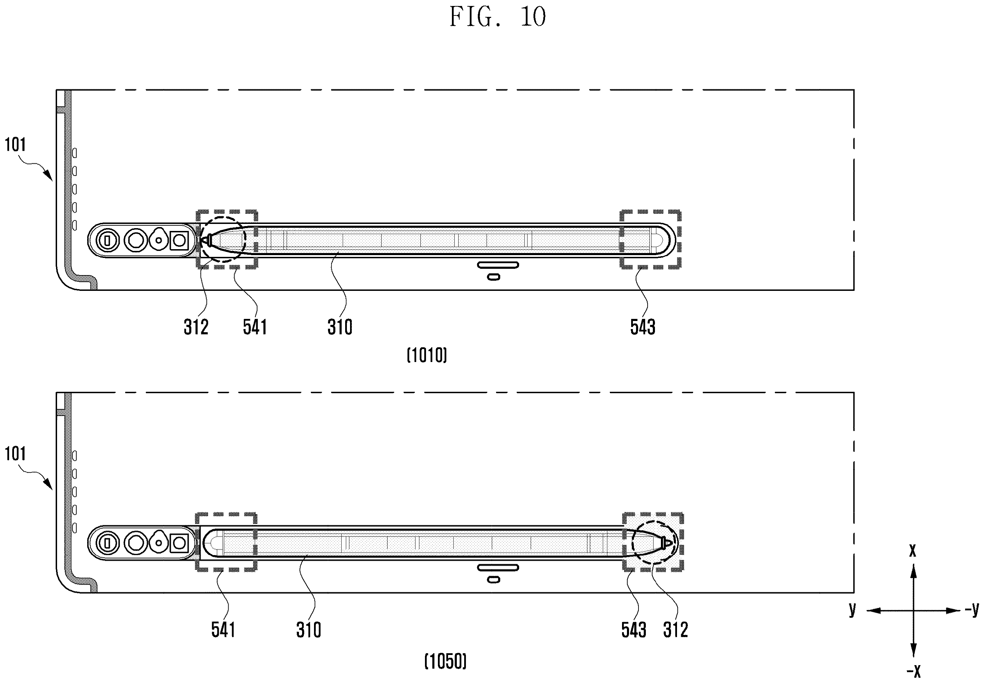

FIG. 10 is a diagram illustrating the state in which the electronic pen 310 is mounted on the pen seating portion 320 according to an embodiment of the disclosure.

Referring to FIG. 10, in an embodiment, a first charging circuit (for example, the first charging circuit 541 of FIG. 5) and a second charging circuit (for example, the second charging circuit 543 of FIG. 5) may be disposed to correspond to at least some partial areas of a pen seating portion (for example, the pen seating portion 320 of FIG. 4) of an electronic device (for example, the electronic device 101 of FIG. 1) and may charge a battery (for example, the battery 640 of FIG. 6) by using a charging coil (for example, the charging coil 630 of FIG. 6) of an electronic pen (for example, the electronic pen 310 of FIGs. 3 and 4) mounted on the pen seating portion 320. For example, the first charging circuit 541 may be disposed in an internal space of the electronic device 101 to correspond to one end of the pen seating portion 320. The second charging circuit 543 may be disposed in an internal space of the electronic device 101 to correspond to another end of the pen seating portion 320.

As indicated by reference numeral <1010> according to an embodiment, a pen tip (for example, the pen tip 312 of FIGs. 3 and 4) of the electronic pen 310 may be mounted on the pen seating portion 320 to face a first direction (for example, a direction of the y axis). In this case, the charging coil 630 located within a pen housing (for example, the pen housing 311 of FIGs. 3 and 4) and extending from one end to another end of the pen housing 311 may be in a proximity state to the first charging circuit 541 formed at one end of the pen seating portion 320. Based on transmission of a signal (for example, a scan signal for detecting proximity of the charging coil 630 of the electronic pen 310) through the first charging circuit 541, a processor (for example, the processor 550 of FIG. 5) may recognize a signal of a resonance frequency formed in the electronic pen 310, so as to detect the state in which the charging coil 630 of the electronic pen 310 is in proximity to the first charging circuit 541. The processor 550 may wirelessly transmit power to the electronic pen 310 through the first charging circuit 541. In this case, the processor 550 may control the second charging circuit 543, which did not detect proximity of the charging coil 630 of the electronic pen 310, to not transmit a signal (for example, a signal for detecting proximity of the charging coil 630 of the electronic pen 310).

As indicated by reference numeral <1050> according to an embodiment, the pen tip 312 of the electronic pen 310 may be mounted on the pen seating portion 320 to face a second direction (for example, a direction opposite to the first direction (for example, the direction of the y axis)) (for example, a direction of the -y axis). In this case, the charging coil 630 located within the pen housing 311 and extending from one end to another end of the pen housing 311 may be in the proximity state to the second charging circuit 543 formed at the other end of the pen seating portion 320. Based on transmission of a signal (for example, a scan signal for detecting proximity of the charging coil 630 of the electronic pen 310) through the second charging circuit 543, the processor 550 may recognize a signal of a resonance frequency formed in the electronic pen 310, so as to detect the state in which the charging coil 630 of the electronic pen 310 is in proximity to the second charging circuit 543. The processor 550 may wirelessly transmit power to the electronic pen 310 through the second charging circuit 543. In this case, the processor 550 may control the first charging circuit 541, which did not detect proximity of the charging coil 630 of the electronic pen 310, to not transmit a signal (for example, a signal for detecting proximity of the charging coil 630 of the electronic pen 310).

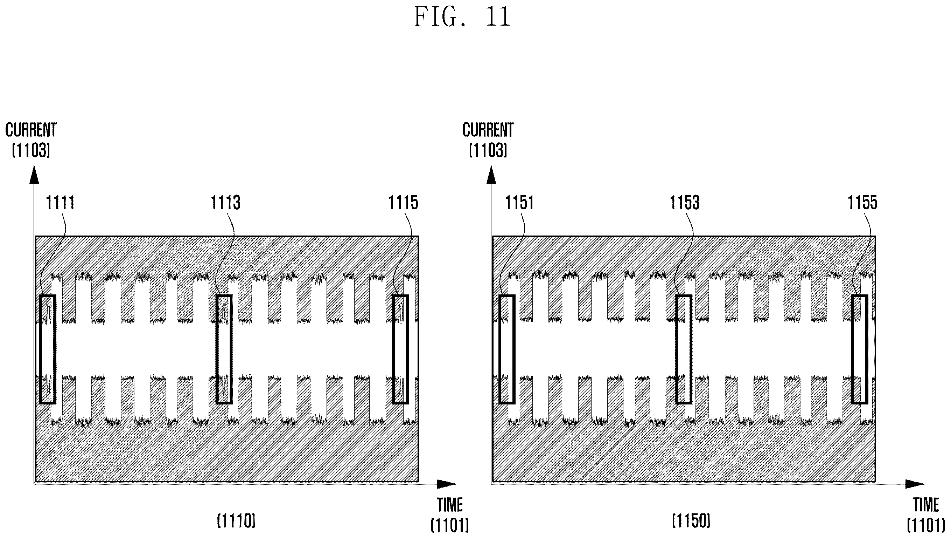

FIG. 11 is a graph illustrating a waveform of the current according to the operation of the first charging circuit 541 and the second charging circuit 543 according to an embodiment of the disclosure.

Referring to FIG. 11, reference numeral <1110> is a graph indicating a current value of a digitizer panel (for example, the digitizer panel 535 of FIG. 5) when power is wirelessly transmitted to the electronic pen 310 through the first charging circuit (for example, the first charging circuit 541 of FIG. 5), based on that charging coil (for example, the charging coil 630 of FIG. 6) of an electronic pen (for example, the electronic pen 310 of FIGs. 3 and 4) is in proximity to the first charging circuit 541 and a signal (for example, a scan signal for detecting proximity of the charging coil 630 of the electronic pen 310) is transmitted through a second charging circuit (for example, the second charging circuit 543 of FIG. 5) (for example, a charging circuit which did not detect the charging coil 630 of the electronic pen 310).

Reference numeral <1150> according to an embodiment is a graph indicating current value of the digitizer panel 535 when power is wirelessly transmitted to the electronic pen 310, based that the charging coil 630 of the electronic pen 310 is detected through the first charging circuit 541 according to an embodiment of the disclosure and the second charging circuit 543 (for example, the charging circuit which did not detect the charging coil 630 of the electronic pen 310) stops transmitting the signal (for example, the scan signal for detecting proximity of the charging coil 630 of the electronic pen 310).

In reference numerals <1110> and <1150> according to an embodiment, the x axis may refer to a time 1101 and the y axis may refer to a current value (mA) 1103.

In an embodiment, the first charging circuit 541 and the second charging circuit 543 may transmit a signal (for example, a scan signal) at predetermined time intervals. For example, the first charging circuit 541 and the second charging circuit 543 may transmit a first signal at a first time. The first charging circuit 541 and the second charging circuit 543 may transmit a second signal at a second time. The first charging circuit 541 and the second charging circuit 543 may transmit a third signal at a third time.

In an embodiment, a first signal 1111, a second signal 1113, and a third signal 1115 in the graph according to reference numeral <1110> are compared to a first signal 1151, a second signal 1153, and a third signal 1155 in the graph according to reference numeral <1150>. As power is wirelessly transmitted to the electronic pen 310 and the second charging circuit 543 stops transmitting the signal, based on that proximity of the charging coil 630 of the electronic pen 310 is detected through the first charging circuit 541, waveforms of the current such as the first signal 1151, the second signal 1153, and the third signal 1155 in the graph according to reference numeral <1150> and the first signal 1111, the second signal 1113, and the third signal 1115 in the graph according to reference numeral <1110> may not be detected.

In an embodiment, as power is wirelessly transmitted to the electronic pen 310 and the second charging circuit 543 (for example, the charging circuit which did not detect the charging coil 630 of the electronic pen 310) is controlled to stop transmitting the signal (for example, the signal for detecting proximity of the charging coil 630 of the electronic pen 310), based on that the charging coil 630 of the electronic pen 310 is detected through the first charging circuit 541, it is possible to prevent the performance of the digitizer panel 535 from deteriorating.

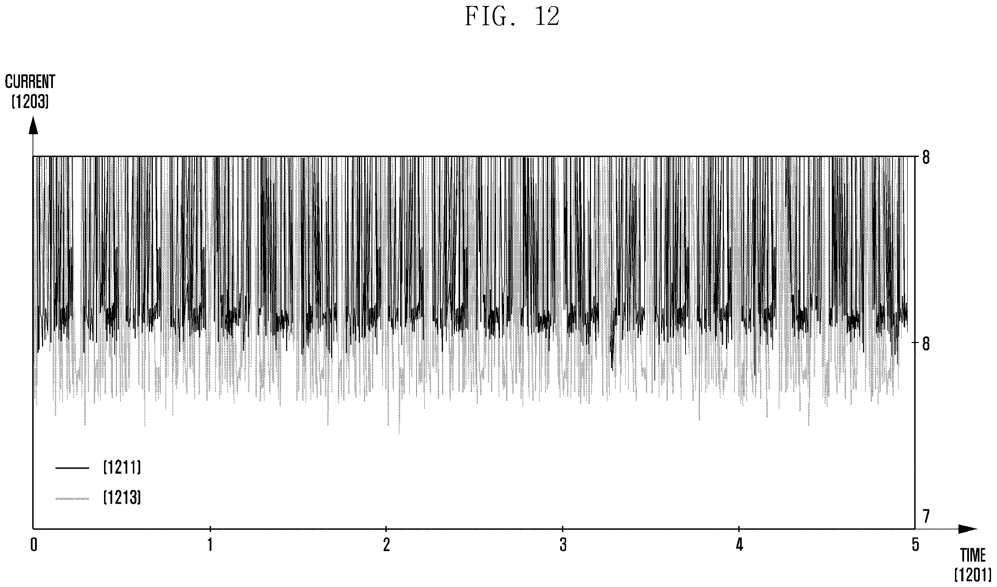

FIG. 12 is a graph illustrating the current according to the operation of the first charging circuit 541 and the second charging circuit 543 according to an embodiment of the disclosure.

Referring to FIG. 12, a first graph 1211 indicates a current value of a digitizer panel (for example, the digitizer panel 535 of FIG. 5) when power is wirelessly transmitted to the electronic pen 310 through the first charging circuit (for example, the first charging circuit 541 of FIG. 5), based on that a charging coil (for example, the charging coil 630 of FIG. 6) of an electronic pen (for example, the electronic pen 310 of FIGs. 3 and 4) is in proximity to the first charging circuit 541 and a signal (for example, a scan signal for detecting proximity of the charging coil 630 of the electronic pen 310) is transmitted through a second charging circuit (for example, the second charging circuit 543 of FIG. 5) (for example, a charging circuit which did not detect the charging coil 630 of the electronic pen 310).

A second graph 1213 according to an embodiment indicates a current value of the digitizer panel 535 when power is wirelessly transmitted to the electronic pen 310 and the second charging circuit 543 (for example, the charging circuit which did not detect the charging coil 630 of the electronic pen 310) stops transmitting a signal (for example, a scan signal for detecting proximity of the charging coil 630 of the electronic pen 310), based on that the charging coil 630 of the electronic pen 310 is detected through the first charging circuit 541.

In FIG. 12 according to an embodiment, the x axis may refer to a time 1201 and the y axis may refer to a current value (mA) 1203.

In an embodiment, it may be identified that the second graph 1213 in the case where power is wirelessly transmitted to electronic pen 310 and the second charging circuit 543 stops transmitting the signal, based on that the charging coil 630 of the electronic pen 310 is detected through the first charging circuit 541, has a gain (for example, about 0.5 mA) of the standby current of the digitizer panel 535 in comparison with the first graph 1211 in the case where power is wirelessly transmitted to the electronic pen 310 and the second charging circuit 543 transmits the signal, based on that the charging coil 630 of the electronic pen 310 is detected through the first charging circuit 541.

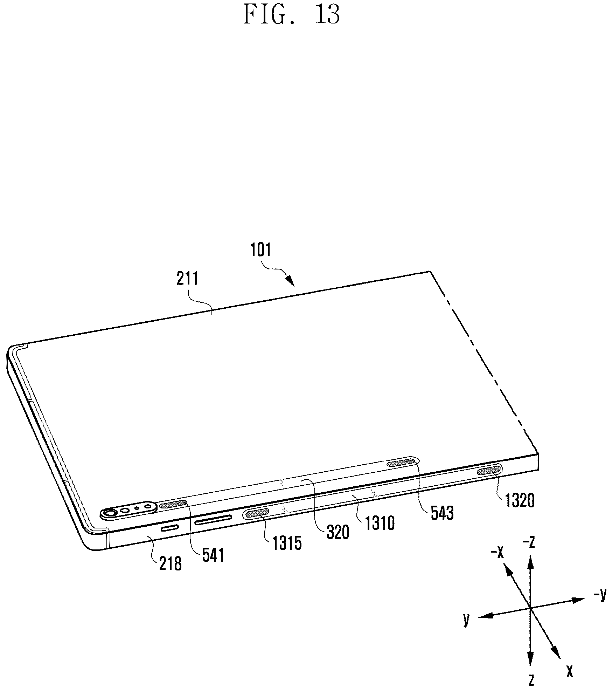

FIG. 13 is a diagram illustrating the first pen seating portion 320 and a second pen seating portion 1310 according to an embodiment of the disclosure.

Referring to FIG. 13, an electronic device (for example, the electronic device 101 of FIG. 1) may include a plurality of pen seating portions provided to be capable of mounting a plurality of electronic pens. For example, the plurality of pen seating portions may include a first pen seating portion (for example, the pen seating portion 320 of FIG. 4) and a second pen seating portion 1310.

In an embodiment, the first pen seating portion 320 may be provided (or formed) in at least a partial area of a rear plate (for example, the rear plate 211 of FIGs. 3 and 4) of the electronic device 101. In an embodiment, the electronic device 101 may include a first charging circuit (for example, the first charging circuit 541 of FIG. 5) and a second charging circuit (for example, the second charging circuit 543) disposed to correspond to at least partial areas of the first pen seating portion 320. For example, the first charging circuit 541 may be disposed to correspond to one end of the first pen seating portion 320. When a pen tip (for example, the pen tip 312 of FIGs. 3 and 4) of the electronic pen 310 is mounted on the first pen seating portion 320 to face a first direction (for example, a direction of the y axis), the first charging circuit 541 may detect a charging coil (for example, the charging coil 630 of FIG. 6) of the electronic pen 310 and charge a battery (for example, the battery 640 of FIG. 6). The second charging circuit 543 may be disposed to correspond to another end of the first seating portion 320. When the pen tip 312 of the electronic pen 310 is mounted on the first pen seating portion 320 to face a second direction (for example, a direction opposite to the first direction (for example, the direction of the y axis)) (for example, a direction of the - y axis), the second charging circuit 543 may detect the charging coil 630 of the electronic pen 310 and charge the battery 640.

In an embodiment, the second pen seating portion 1310 may be provided (or formed) in a partial area of a side member (for example, the side member 218 of FIGs. 2 to 4) of the electronic device 101. In an embodiment, the electronic device 101 may include a third charging circuit 1315 and a fourth charging circuit 1320 disposed to correspond to at least partial areas of the second pen seating portion 1310. For example, the third charging circuit 1315 may be disposed in an internal space of the electronic device 101 to correspond to one end of the second pen seating portion 1310. When the pen tip 312 of the electronic pen 310 is mounted on the second pen seating portion 1310 to face the first direction (for example, the direction of the y axis), the third charging circuit 1315 may detect the charging coil 630 of the electronic pen 310 and charge the battery 640. The fourth charging circuit 1320 may be disposed in an internal space of the electronic device 101 to correspond to another end of the second pen seating portion 1310. When the pen tip 312 of the electronic pen 310 is mounted on the second pen seating portion 1310 to face the second direction (for example, the direction opposite to the first direction (for example, the direction of the y axis)) (for example, the direction of the - y axis), the fourth charging circuit 1320 may detect the charging coil 630 of the electronic pen 310 and charge the battery 640.

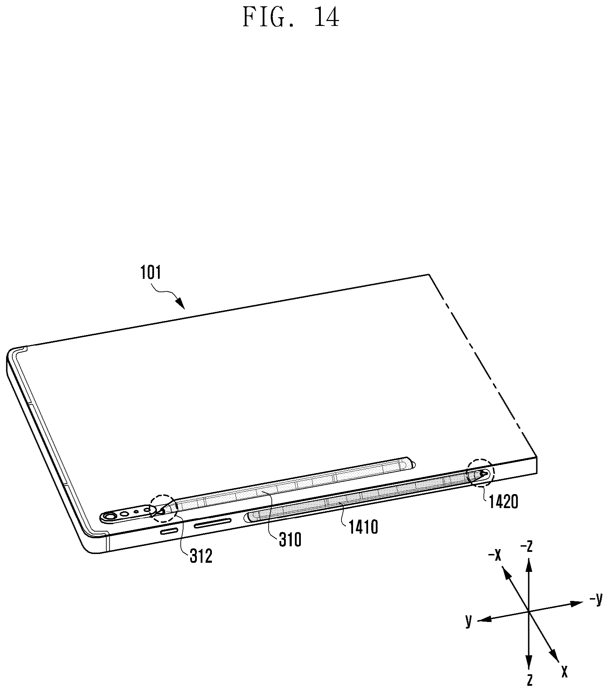

FIG. 14 is a diagram illustrating the state in which the first electronic pen 310 and a second electronic pen 1410 are mounted on the first pen seating portion 320 and the second pen seating portion 1310, respectively, according to an embodiment of the disclosure.

Referring to FIG. 14, a pen tip (for example, the pen tip 312 of FIGs. 3 and 4) of a first electronic pen (for example, the electronic pen 310 of FIGs. 3 and 4) may be mounted on a first pen seating portion (for example, the pen seating portion 320 of FIG. 4) to face a first direction (for example, a direction of the y axis). In this case, a charging coil (for example, the charging coil 630 of FIG. 6) located within a pen housing (for example, the pen housing 311 of FIGs. 3 and 4) and extending from one end to another end of the pen housing 311 may be in the proximity state to a first charging circuit (for example, the first charging circuit 541 of FIG. 5) formed at one end of the first pen seating portion 320. Based on transmission of a signal (for example, a scan signal for detecting proximity of the charging coil 630 of the first electronic pen 310) through the first charging circuit 541, a processor (for example, the processor 550 of FIG. 5) may recognize a signal of a resonance frequency formed in the first electronic pen 310, so as to detect the state in which the charging coil 630 of the first electronic pen 310 is in proximity to the first charging circuit 541. The processor 550 may wirelessly transmit power to the first electronic pen 310 through the first charging circuit 541. In this case, the processor 550 may control a second charging circuit (for example, the second charging circuit 543 of FIG. 5), which did not detect proximity of the charging coil 630 of the first electronic pen 310, to not transmit the signal.

Although not illustrated, when the pen tip 312 of the first electronic pen 310 is mounted on the first pen seating portion 320 to face a second direction opposite to the first direction (for example, the direction of the y axis) (for example, a direction of the -y axis), the charging coil 630 of the first electronic pen 310 may be in the proximity state to the second charging circuit 543. The processor 550 may wirelessly transmit power to the first electronic pen 310 through the second charging circuit 543. In this case, the processor 550 may control the first charging circuit 541, which did not detect proximity of the charging coil 630 of the first electronic pen 310, to not transmit the signal.

Although not illustrated, when proximity of the charging coil 630 of the first electronic pen 310 is not detected through the first charging circuit 541 and the second charging circuit 543, the first charging circuit 541 and the second charging circuit 543 may continuously perform an operation of transmitting a signal for detecting proximity of the charging coil 630 of the first electronic pen 310. For example, the signal may be transmitted at predetermined time intervals.

In an embodiment, the pen tip 1420 of the second electronic pen 1410 may be mounted on a second pen seating portion (for example, the second pen seating portion 1310 of FIG. 13) to face the second direction (For example, the direction of the -y axis). In this case, the charging coil located within the pen housing of the second electronic pen 1410 and extending from one end to another end of the pen housing may be in the proximity state to a fourth charging circuit (for example, the fourth charging circuit 1320 of FIG. 13) formed in one end of the second pen seating portion 1310. Based on transmission of a signal (for example, a scan signal for detecting proximity of the charging coil of the second electronic pen 1410) through the fourth charging circuit 1320, the processor 550 may recognize a signal of a resonance frequency formed in the second electronic pen 1410, so as to detect the state in which the charging coil of the second electronic pen 1410 is in proximity to the fourth charging circuit 1320. The processor 550 may wirelessly transmit power to the second electronic pen 1410 through the fourth charging circuit 1320. In this case, the processor 550 may control a third charging circuit (for example, the third charging circuit 1315 of FIG. 13), which did not detect proximity of the charging coil of the second electronic pen 1410, to not transmit the signal.

Although not illustrated, when the pen tip 1420 of the second electronic pen 1410 is mounted on the second pen seating portion 1310 to face a first direction (for example, a direction of the y axis), the charging coil of the second electronic pen 1410 may be in the proximity state to the third charging circuit 1315. The processor 550 may wirelessly transmit power to the second electronic pen 1410 through the third charging circuit 1315. In this case, the processor 550 may control the fourth charging circuit 1320, which did not detect proximity of the charging coil of the second electronic pen 1410, to not transmit the signal (for example, the scan signal for detecting proximity of the charging coil of the second electronic pen 1410).

Although not illustrated, when proximity of the charging circuit of the second electronic pen 1410 is not detected through the third charging circuit 1315 and the fourth charging circuit 1320, the third charging circuit 1315 and the fourth charging circuit 1320 may continuously perform the operation of transmitting a signal for detecting proximity of the charging coil of the second electronic pen 1410. For example, the signal may be transmitted at predetermined time intervals.

The second electronic pen 1410 according to an embodiment may have the same components as the electroicn pen 310 of FIG. 5 described above.

In FIG. 14 according to various embodiments, it has been described that the first electronic pen 310 is mounted on the first pen seating portion 320 and the second electronic pen 1410 is mounted on the second pen seating portion 1310, but is not limited thereto. For example, the second electronic pen 1410 may be mounted on the first pen seating portion 320 and the first electronic pen 310 may be mounted on the second pen seating portion 1310. In this case, the operation of the first charging circuit 541, the second charging circuit 543, the third charging circuit 1315, and the fourth charging circuit 1320 may be the same as the operation in the case where the first electronic pen 310 is mounted on the first pen seating portion 320 and the second electronic pen 1410 is mounted on the second pen seating portion 1310.

In FIG. 14 according to various embodiments, it has been described that the electronic device 101 includes two pen seating portions, but is not limited thereto. For example, the electronic device 101 may include pen seating portions larger than two.

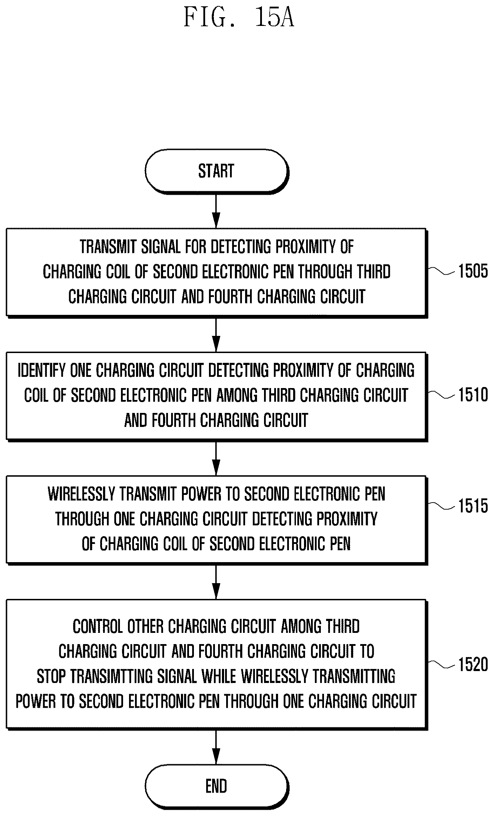

FIG. 15A is a flowchart illustrating a method of charging the second electronic pen 1410 of the electronic device 101 according to an embodiment of the disclosure.

In the following embodiment, respective operations may be sequentially performed but are not necessarily sequentially performed. For example, sequences of the respective operations may be changed, and at least two operations may be performed in parallel.

According to an embodiment, operation 1505 to operation 1520 may be understood as being performed by the electronic device (for example, the processor (for example, the processor 550 of FIG. 5) of the electronic device 101 of FIG. 1).

FIG. 15A according to various embodiments may be performed in addition to the operations of FIG. 7A described above or may be performed in parallel with the respective operations of FIG. 7 described above. The disclosure is not limited thereto, and FIG. 15A may operate separately from the operations of FIG. 7A described above.

Referring to FIG. 15A, the processor 550 may transmit a signal for detecting proximity of a charging coil (not shown) of a second electronic pen (for example, the second electronic pen 1410 of FIG. 14) through a third charging circuit (for example, the third charging circuit 1315 of FIG. 13) and a fourth charging circuit (for example, the fourth charging circuit 1320 of FIG. 13) in operation 1505. For example, the signal for detecting proximity of the charging coil of the second electronic pen 1410 may include a scan signal.

In an embodiment, the third charging circuit 1315 and the fourth charging circuit 1320 may be disposed to correspond to at least a partial area of a second pen seating portion (for example, the second pen seating portion 1310 of FIG. 13) to charge a battery of the second electronic pen 1410 mounted on the second pen seating portion 1310. For example, the third charging circuit 1315 may be disposed to correspond to one end of the second pen seating portion 1310, and the fourth charging circuit 1320 may be disposed to correspond to another end of the second pen seating portion 1310.

For example, when a pen tip (for example, the pen tip 1420 of FIG. 14) of the second electronic pen 1410 is mounted on the second pen seating portion 1310 to face a first direction (for example, a direction of the y axis in FIG. 14), the third charging circuit 1315 may be disposed in an internal space of the electronic device 101 to correspond to the location physically adjacent to the second electronic pen 1410. When the pen tip 1420 of the second electronic pen 1410 is mounted on the second pen seating portion 1310 to face a second direction (for example, a direction opposite to the first direction (for example, the direction of the y axis)) (for example, a direction of the -y axis in FIG. 14), the fourth charging circuit 1320 may be disposed in the internal state of the electronic device 101 to correspond to the location physically adjacent to the charging coil of the second electronic pen 1410.

In an embodiment, a digitizer panel (for example, the digitizer panel 535 of FIG. 5) may be constituted by a plurality of channels for detecting an input of the electronic pen (for example, the first electronic pen 310 and/or the second electronic pen 1410).

In an embodiment, the third charging circuit 1315 may be connected to third channels (for example, at least some channels except for the first channels connected to the first charging circuit 541 and the second channels connected to the second charging circuit 543) among the plurality of channels constituting the digitizer panel 535. Among the plurality of channels constituting the digitizer panel 535, the third channels connected to the third charging circuit 1315 may transmit a signal for detecting proximity of the charging coil of the second electronic pen 1410.

In an embodiment, the fourth charging circuit 1320 may be connected to the fourth channels (for example, at least other some channels except for the first channels connected to the first charging circuit 541 and the second channels connected to the second charging circuit 543) among the plurality of channels constituting the digitizer panel 535. Among the plurality of channels constituting the digitizer panel 535, the fourth channels connected to the fourth charging circuit 1320 may transmit a signal for detecting proximity of the charging coil of the second electronic pen 1410.

In an embodiment, the processor 550 may identify one charging circuit detecting proximity of the charging coil of the second electronic pen 1410 among the third charging circuit 1315 and the fourth charging circuit 1320 in operation 1510.

In an embodiment, when the pen tip 1420 of the second electronic pen 1410 is mounted on the second pen seating portion 1310 to face the first direction (for example, the direction of the y axis in FIG. 14), the charging coil located within the pen housing and extending from one end to another end of the pen housing may be in the proximity state to the third charging circuit 1315. Based thereon, when the pen tip 1420 of the second electronic pen 1410 is mounted on the second pen seating portion 1310 to face the first direction (For example, the direction of the y axis in FIG. 14), the processor 550 may detect the state in which the charging coil of the second electronic pen 1410 is in proximity to the third charging circuit 1315 through the third charging circuit 1315 among the third charging circuit 1315 and the fourth charging circuit 1320.

In an embodiment, when the pen tip 1420 of the second electronic pen 1410 is mounted on the second pen seating portion 1310 to face the second direction (for example, the direction opposite to the first direction (for example, the direction of the y axis in FIG. 14)) (for example, the direction of the -y axis in FIG. 14), the charging coil of the second electronic pen 1410 may be in the proximity state to the fourth charging circuit 1320. Based thereon, when the pen tip 1420 of the second electronic pen 1410 is mounted on the second pen seating portion 1310 to face the second direction (for example, the direction of the -y axis in FIG. 14), the processor 550 may detect the state in which the charging coil of the second electronic pen 1410 is in proximity to the fourth charging circuit 1320 through the fourth charging circuit 1320 among the third charging circuit 1315 and the fourth charging circuit 1320.

In an embodiment, when the charging coil of the second electronic pen 1410 is in proximity to the third charging circuit 1315 or the fourth charging circuit 1320, the current may flow through the internal circuit of the second electronic pen 1410 due to an electromagnetic induction phenomenon to form a signal of a resonance frequency. In response to the transmitted signal, the third charging circuit 1315 or the fourth charging circuit 1320 may detect a seated state of the second electronic pen 1410 in the second pen seating portion 1310 and a proximity state of the charging coil of the second electronic pen 1410 to the third charging circuit 1315 or the fourth charging circuit 1320 by receiving (or recognizing) the signal of the resonance frequency formed in the second electronic pen 1410.

In an embodiment, the processor 550 may wirelessly transmit power to the second electronic pen 1410 through one charging circuit detecting proximity of the charging coil of the second electronic pen 1410 in operation 1515.

In an embodiment, the processor 550 may receive a signal indicating proximity of the charging coil of the second electronic pen 1410 from one charging circuit detecting proximity of the charging coil of the second electronic pen 1410. Based on reception of the signal indicating proximity of the charging coil of the second electronic pen 1410 from one charging circuit detecting proximity of the charging coil of the second electronic pen 1410, the processor 550 may control one charging circuit detecting proximity of the charging coil of the second electronic pen 1410 to transmit power to the second electronic pen 1410.

In an embodiment, the processor 550 may control the one charging circuit to transmit a signal (for example, a scan signal) even in the state in which one charging circuit detecting proximity of the charging coil of the second electronic pen 1410 wirelessly transmits power to the second electronic pen 1410. For example, the signal may be transmitted at predetermined time intervals. For example, by controlling the one charging circuit to transmit the signal in the state where the one charging circuit detecting proximity of the charging coil of the second electronic pen 1410 wirelessly transmits power to the second electronic pen 1410, the processor 550 may periodically identify whether the charging coil of the second electronic pen 1410 is separated (or the state in which the second electronic pen 1410 is removed (or separated) from the second pen seating portion 1310) from the one charging circuit.

In an embodiment, the processor 550 may control the other charging circuit among the third charging circuit 1315 and the fourth charging circuit 1320 to stop transmitting the signal (for example, the scan signal) while power is wirelessly transmitted to the second electronic pen 1410 through the identified charging circuit in operation 1520. For example, the processor 550 may control the other charging circuit to make the other charging circuit, which did not detect proximity of the charging coil of the second electronic pen 1410, not transmit the signal for detecting proximity of the charging coil of the second electronic pen 1410.

In an embodiment, since proximity of the charging coil of the second electronic pen 1410 is detected through one charging circuit and the battery of the second electronic pen 1410 is charged using power wirelessly received through one charging circuit, the operation of transmitting the signal for detecting proximity of the charging coil of the second electronic pen 1410 of the other charging circuit, which did not detect proximity of the charging coil of the second electronic pen 1410, may not be needed. Based thereon, the processor 550 may control the other one charging circuit to stop transmitting the signal to prevent the unnecessary operation from being performed, thereby reducing power consumption of the electronic device 101.

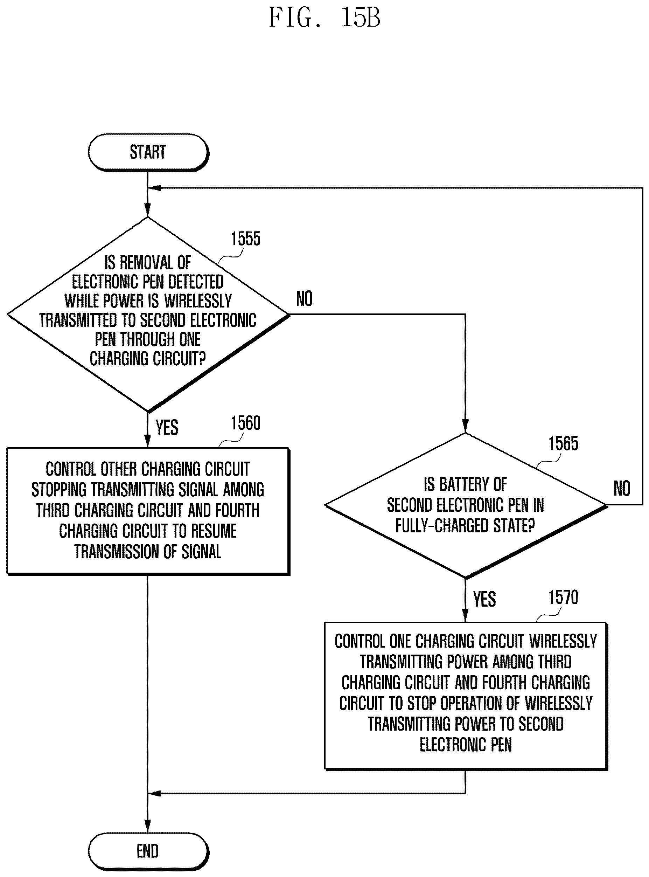

FIG. 15B is a flowchart illustrating a method of charging the second electronic pen 1410 of the electronic device 101 according to an embodiment of the disclosure.

In the following embodiment, respective operations may be sequentially performed but are not necessarily sequentially performed. For example, sequences of the respective operations may be changed, and at least two operations may be performed in parallel.

According to an embodiment, operation 1555 to operation 1570 may be understood as being performed by a processor (for example, the processor 550 of FIG. 5) an electronic device (for example, the electronic device 101 of FIG. 1).

FIG. 15B according to various embodiments may be an additional operation of FIG. 15A described above.

Referring to FIG. 15B, the processor 550 may identify whether removal of the second electronic pen 1410 is detected while power is wirelessly transmitted to the second electronic pen (for example, the second electronic pen 1410 of FIG. 14) through one charging circuit among the third charging circuit 1315 and the fourth charging circuit 1320 in operation 1555.

In an embodiment, the processor 550 may transmit a signal (for example, a scan signal) through one charging circuit detecting proximity of the charging coil of the second electronic pen 1410 even in the state in which the one charging circuit detecting proximity of the charging coil of the second electronic pen 1410 wirelessly transmits power to the second electronic pen 1410. For example, even in the state in which one charging circuit detecting proximity of the charging coil of the second electronic pen 1410 (for example, the charging circuit detecting proximity of the charging coil of the second electronic pen 1410) wirelessly transmits power to the second electronic pen 1410, the operation of transmitting the signal through the one charging circuit detecting proximity of the charging coil of the second electronic pen 1410 may be an operation for detecting the state (for example, non-proximity state) in which the charging coil of the second electronic pen 1410 is separated from one charging circuit (or an operation for detecting the state in which the second electronic pen 1410 is removed (or separated) from the second pen seating portion (for example, the second pen seating portion 1310 of FIG. 13)).

For example, when a signal of a resonance frequency formed in the second electronic pen 1410 (for example, a signal of a resonance frequency formed according to proximity of the second electronic pen 1410 to the one charging circuit) is recognized in response to the signal transmitted through one charging circuit detecting proximity of the charging coil of the second electronic pen 1410, the processor 550 may identify that the charging coil of the second electronic pen 1410 is still in the proximity state to the one charging circuit (or the state in which the second electronic pen 1410 is seated on the second pen seating portion 1310).

In another example, when no signal is received from the second electronic pen 1410 within a predetermined time in response to the signal transmitted through one charging circuit detecting proximity of the charging coil of the second electronic pen 1410, the processor 550 may identify that the charging coil of the second electronic pen 1410 is in the separation state from the one charging circuit (or the state in which the second electronic pen 1410 is removed (or separated) from the second pen seating portion 1310).

In an embodiment, when it is identified that removal of the second electronic pen 1410 is detected (for example, YES of operation 1555), the processor 550 may control the other charging circuit stopping transmitting the signal among the third charging circuit 1315 and the fourth charging circuit 1320 to resume transmission of the signal in operation 1560.

In an embodiment, since it should be detected whether the second electronic pen 1410 is mounted or the charging coil of the second electronic pen 1410 is in the proximity state to the third charging circuit 1315 or the fourth charging circuit 1320 as the second electronic pen 1410 is removed, the processor 550 may control the other charging circuit to allow the other charging circuit stopping transmitting the signal (for example, the scan signal) to resume transmission of the signal.

In an embodiment, when it is identified that removal of the second electronic pen 1410 is not detected (for example, NO of operation 1555), the processor 550 may identify whether the battery of the second electronic pen 1410 is in a fully-charged state in operation 1565. For example, the processor 550 may receive information related to the fully-charged state of the battery of the second electronic pen 1410 from the second electronic pen 1410 and identify whether the battery of the second electronic pen 1410 is in the fully-charged state, based thereon.

In an embodiment, when it is identified that the battery of the second electronic pen 1410 is in the fully-charged state (for example, YES of operation 1565), the processor 550 may control one charging circuit wirelessly transmitting power among the third charging circuit 1315 and the fourth charging circuit 1320 to stop the operation of wirelessly transmitting power to the second electronic pen 1410 in operation 1570.

In an embodiment, the processor 550 may transmit the signal (for example, the scan signal) through the one charging circuit at predetermined time intervals even in the state in which the one charging circuit is controlled to stop the operation of wirelessly transmitting power to the second electronic pen 1410. For example, in order to identify whether removal of the second electronic pen 1410 from the second pen seating portion 1310 is detected in the state in which the one charging circuit is controlled to stop the operation of wirelessly transmitting power to the second electronic pen 1410, the processor 550 may transmit the signal through the one charging circuit at predetermined time intervals.

In an embodiment, not illustrated, as the one charging circuit stops the operation of wirelessly transmitting power, the second electronic pen 1410 may stop the operation of charging the battery through the charging coil. When it is identified that the remaining capacity of the battery measured after a predetermined time in the state in which the battery is fully charged is lower than a predefined value, the second electronic pen 1410 may transmit information related to the remaining capacity of the battery (or a signal making a request for resuming charging) to the electronic device 101. Based on the information related to the remaining capacity of the battery (or the signal making the request for resuming charging) received from the second electronic pen 1410, the processor 550 may control one charging circuit to resume the operation of wirelessly transmitting power to the second electronic pen 1410.

In an embodiment, when it is not identified that the battery of the second electronic pen 1410 is in the fully-charged state (for example, NO of operation 1565), the processor 550 may proceed to operation 1555 to perform the operation of wirelessly transmitting power to the second electronic pen 1410 through one charging circuit and identifying whether removal of the second electronic pen 1410 is detected.

In various embodiments, it has been described that it is determined whether the one charging circuit performs the operation of wirelessly transmitting power to the second electronic pen 1410, based on whether the battery of the second electronic pen 1410 is in the fully-charged state, but is not limited thereto. For example, the processor 550 may receive temperature information of the second electronic pen 1410 (for example, temperature information of the second electronic pen 1410 and/or temperature information of the battery of the second electronic pen 1410). In this case, when it is identified that the temperature of the second electronic pen 1410 is higher than a predetermined temperature, the processor 550 may control one charging circuit wirelessly transmitting power among the third charging circuit 1315 and the fourth charging circuit 1320 to stop the operation of wirelessly transmitting power to the second electronic pen 1410.

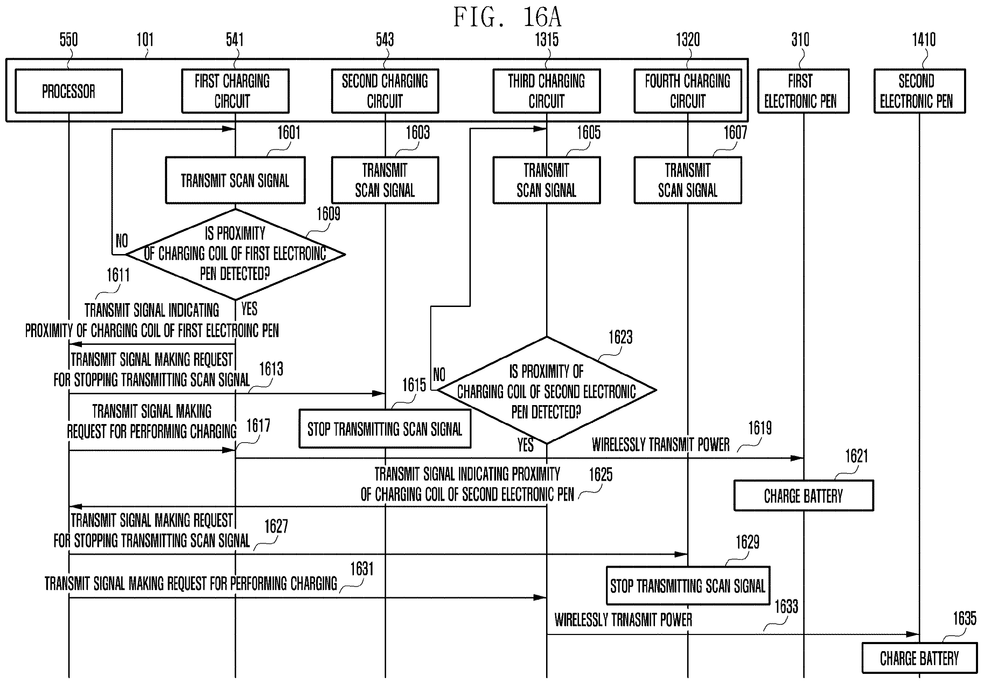

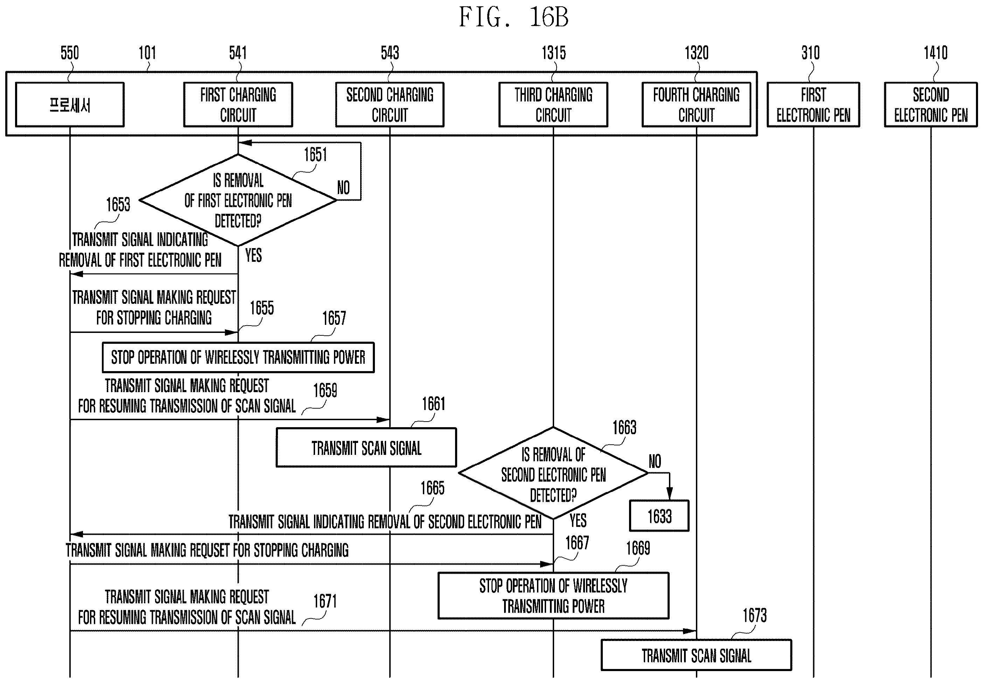

FIGs. 16A and 16B are diagrams illustrating the signal flow between the electronic device 101 (for example, the processor 550, the first charging circuit 541, the second charging circuit 543, the third charging circuit 1315, or the fourth charging circuit 1320), the first electronic pen 310, and the second electronic pen 1410, according to an embodiment of the disclosure.

In the following embodiment, respective operations may be sequentially performed but are not necessarily sequentially performed. For example, sequences of the respective operations may be changed, and at least two operations may be performed in parallel.

In description of FIGs. 16A and 16B according to various embodiments, it is assumed and described that, among a first charging circuit (for example, the first charging circuit 541 of FIG. 5) and a second charging circuit (for example, the second charging circuit 543 of FIG. 5), the first charging circuit 541 detects proximity of a charging coil (for example, the charging coil 630 of FIG. 6) of a first electronic pen (for example, the electronic pen 310 of FIGs. 3 and 4). Further, it is assumed and described that, among a third charging circuit (for example, the third charging circuit 1315 of FIG. 13) and a fourth charging circuit (for example, the fourth charging circuit 1320 of FIG. 13), the third charging circuit 1315 detects proximity of a charging coil of a second electronic pen (for example, the second electronic pen 1410 of FIG. 14).

Since operation 1601, operation 1603, operation 1609, operation 1611, operation 1613, operation 1615, operation 1617, operation 1619, operation 1621, operation 1651, operation 1653, operation 1655, operation 1657, operation 1659, and operation 1661 of FIG. 16A according to various embodiments are substantially the same as operation 805 to operation 870 of FIG. 8 described above, detailed description related thereto may be replaced with the description of FIG. 8.

Referring to FIGs. 16A and 16B, the first charging circuit 541 may transmit a scan signal in operation 1601. The second charging circuit 543 may transmit the scan signal in operation 1603. The third charging circuit 1315 may transmit the scan signal in operation 1605. The fourth charging circuit 1320 may transmit the scan signal in operation 1607. For example, the scan signals transmitted by the first charging circuit 541, the second charging circuit 543, the third charging circuit 1315, and the fourth charging circuit 1320 may be signals for detecting proximity of the charging coil 630 of the first electronic pen 310 and/or the charging coil of the second electronic pen 1410 (or signals for detecting the state in which the first electronic pen 310 and/or the second electronic pen 1410 are mounted on a first pen seating portion (for example, the pen seating portion 320 of FIG. 4) and/or a second pen seating portion (for example, the second pen seating portion 1310 of FIG. 13)).

In an embodiment, the first charging circuit 541 may identify whether proximity of the charging coil 630 of the first electronic pen 310 is detected in operation 1609. When proximity of the charging coil 630 of the first electronic pen 310 is not detected (for example, NO of operation 1609), the first charging circuit 541 may proceed to operation 1601 and continuously perform the operation of transmitting the scan signal.

In an embodiment, when proximity of the charging coil 630 of the first electronic pen 310 is detected (for example, YES of operation 1609), the first charging circuit 541 may transmit a signal indicating proximity of the charging coil 630 of the first electronic pen 310 to the processor 550 in operation 1611. In operation 1613, the processor 550 may transmit a signal making a request for stopping transmitting the scan signal to the second charging circuit 543. Based on reception of the signal making the request for stopping transmitting the scan signal from the processor 550, the second charging circuit 543 may stop the operation of transmitting the scan signal in operation 1615.

In an embodiment, the processor 550 may transmit a signal making a request for performing charging to the first charging circuit 541 in operation 1617. The first charging circuit 541 may wirelessly transmit power to the first electronic pen 310 in operation 1619. The first electronic pen 310 may charge a battery (for example, the battery 640 of FIG. 6) by using the power wirelessly received from the first charging circuit 541 in operation 1621.

In an embodiment, the third charging circuit 1315 may identify whether proximity of the charging coil of the second electronic pen 1410 is detected in operation 1623.

In an embodiment, when a pen tip (for example, the pen tip 1420 of FIG. 14) of the second electronic pen 1410 is mounted on the second pen seating portion 1310 to face a first direction (for example, a direction of the y axis in FIG. 14), the charging coil located within a pen housing and extending from one end to another end of the pen housing may be in the proximity state to the third charging circuit 1315. When the charging coil of the second electronic pen 1410 is in proximity to the third charging circuit 1315, the current may flow through the internal circuit of the second electronic pen 1410 due to an electromagnetic induction phenomenon and a signal of a resonance frequency may be formed. The third charging circuit 1315 may detect the state in which the charging coil of the second electronic pen 1410 is in proximity to the third charging circuit 1315 by recognizing the signal of the resonance frequency formed in the second electronic pen 1410.

In an embodiment, although not illustrated, the fourth charging circuit 1320 may also identify whether proximity of the charging coil of the second electronic pen 1410 is detected. For example, when the pen tip 1420 of the second electronic pen 1410 is mounted on the second pen seating portion 1310 to face a second direction (for example, a direction opposite to the first direction (for example, the direction of the y axis)) (for example, a direction of the -y axis in FIG. 14), the charging coil of the second electronic pen 1410 may be in the proximity state to the fourth charging circuit 1320. As the charging coil of the second electronic pen 1410 is in proximity to the fourth charging circuit 1320, the fourth charging circuit 1320 may recognize the signal of the resonance frequency formed in the second electronic pen 1410, so as to detect the state in which the charging coil of the second electronic pen 1410 is in proximity to the fourth charging circuit 1320.

In an embodiment, when proximity of the charging coil of the second electronic pen 1410 is not detected (for example, NO of operation 1623), the third charging circuit 1315 may proceed to operation 1605 and continuously perform the operation of transmitting the scan signal.

In an embodiment, when proximity of the charging coil of the second electronic pen 1410 is detected (for example, YES of operation 1623), the third charging circuit 1315 may transmit a signal indicating proximity of the charging coil of the second electronic pen 1410 to the processor 550 in operation 1625. Based on reception of the signal indicating proximity of the charging coil 630 of the electronic pen 310 from the third charging circuit 1315, the processor 550 may transmit a signal making a request for stopping transmitting the scan signal of the fourth charging circuit 1320 to the fourth charging circuit 1320 in operation 1627. Based on the signal making the request for stopping transmitting the scan signal received from the processor 550, the fourth charging circuit 1320 may stop transmitting the scan signal in operation 1629.

In an embodiment, the processor 550 may transmit a signal making a request for performing charging to the third charging circuit 1315 in operation 1631. The third charging circuit 1315 may wirelessly transmit power to the second electronic pen 1410 in operation 1633. The second electronic pen 1410 may charge the battery by using the power wirelessly received from the third charging circuit 1315 in operation 1635.

In an embodiment, the first charging circuit 541 may identify whether removal of the first electronic pen 310 is detected in operation 1651. For example, the first charging circuit 541 may identify whether the charging coil 630 of the first electronic pen 310 is in a separation state from the first charging circuit 541 (for example, a non-proximity state) (or a state in which the first electronic pen 310 is removed (or separated) from the first pen seating portion 320) by transmitting the scan signal at predetermined time intervals while power is wirelessly transmitted to the first electronic pen 310.

In an embodiment, when removal of the first electronic pen 310 is not detected (for example, NO of operation 1653), the first charging circuit 541 may proceed to operation 1651 and continuously perform the operation of wirelessly transmitting power to the electronic pen 310. When removal of the first electronic pen 310 is detected (for example, YES of operation 1651), the first charging circuit 541 may transmit a signal indicating removal of the first electronic pen 310 to the processor 550 in operation 1653. In operation 1655, the processor 550 may transmit a signal making a request for stopping charging to the first charging circuit 541. Based on reception of the signal making the request for stopping charging from the processor 550, the first charging circuit 541 may stop the operation of wirelessly transmitting power to the first electronic pen 310 in operation 1657.

In an embodiment, the processor 550 may transmit a signal resuming transmission of the scan signal to the second charging circuit 543 in operation 1659. Based on reception of the signal making the request for resuming transmission of the scan signal from the processor 550, the second charging circuit 543 may transmit the scan signal in operation 1661.

In an embodiment, the third charging circuit 1315 may identify whether removal of the second electronic pen 1410 is detected in operation 1663. For example, the third charging circuit 1315 may identify whether the charging coil of the second electronic pen 1410 is in the separation state from the third charging circuit 1315 (for example, the non-proximity state) (or the state in which the second electronic pen 1410 is removed (or separated) from the second pen seating portion 1310 by transmitting the scan signal at predetermined time intervals while power is wirelessly transmitted to the second electronic pen 1410.

In an embodiment, when removal of the second electronic pen 1410 is not detected (for example, NO of operation 1663), the third charging circuit 1315 may proceed to operation 1633 and continuously perform the operation of wirelessly transmitting power to the second electronic pen 1410. For example, the operation of wirelessly transmitting power to the second electronic pen 1410 may be performed until information related to the fully-charged state of the battery 640 is received from the second electronic pen 1410. However, the disclosure is not limited thereto.

In an embodiment, when removal of the second electronic pen 1410 is detected (for example, YES of operation 1663), the third charging circuit 1315 may transmit a signal indicating removal of the second electronic pen 1410 to the processor 550 in operation 1665. In operation 1667, the processor 550 may transmit a signal making a request for stopping charging to the third charging circuit 1315. Based on reception of the signal making the request for stopping charging from the processor 550, the third charging circuit 1315 may stop the operation of wirelessly transmitting power to the second electronic pen 1410 in operation 1669. Although not illustrated, as the third charging circuit 1315 stops the operation of wirelessly transmitting power, the second electronic pen 1410 may stop (or end) the operation of charging the battery through the charging coil.

In an embodiment, the processor 550 may transmit a signal making a request for resuming transmission of the scan signal to the fourth charging circuit 1320 in operation 1671. Based on reception of the signal making the request for resuming transmission of the scan signal from the processor 550, the fourth charging circuit 1320 may transmit the scan signal in operation 1673. For example, the fourth charging circuit 1320 may identify whether proximity of the charging coil of the second electronic pen 1410 is detected by resuming transmission of the scan signal stopped in operation 1629. In other words, the processor 550 may transmit the scan signal through the third charging circuit 1315 and the fourth charging circuit 1320 by controlling the fourth charging circuit 1320 to resume transmission of the scan signal. Based thereon, the processor 550 may identify whether the charging coil of the second electronic pen 1410 is in proximity to the third charging circuit 1315 or the fourth charging circuit 1320.

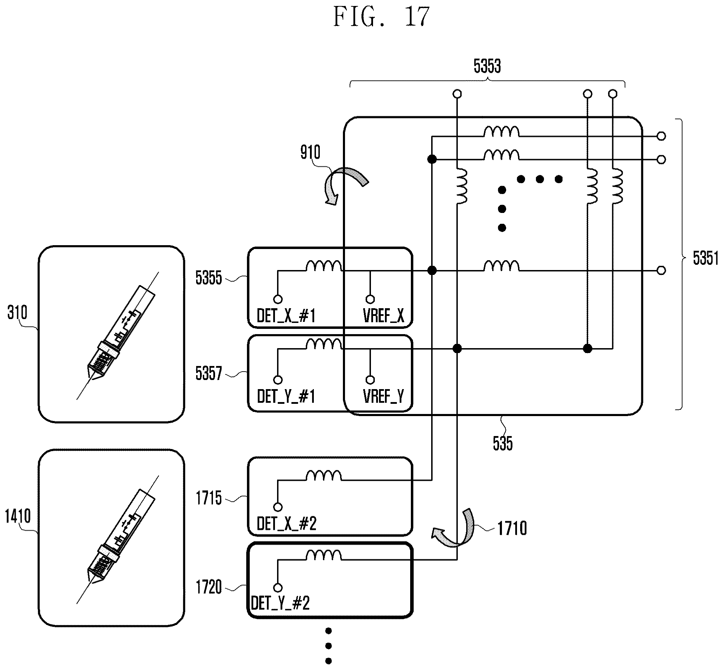

FIG. 17 is a diagram illustrating the first charging circuit 541, the second charging circuit 543, a third charging circuit 1715, and a fourth charging circuit 1720 according to an embodiment of the disclosure.

In FIG. 17 according to various embodiments, it is described that a first electronic pen (for example, the electronic pen 310 of FIGs. 3 and 4) is mounted on a first pen seating portion (for example, the pen seating portion 320 of FIG. 4) and a second electronic pen (for example, the second electronic pen 1410 of FIG. 14) is mounted on a second pen seating portion (for example, the second pen seating portion 1310 of FIG. 13), but is not limited thereto.

Referring to FIG. 17, a digitizer panel (for example, the digitizer panel 535 of FIG. 5) may be constituted by a plurality of channels. For example, the plurality of channels may include a plurality of X channel electrodes 5351 and a plurality of Y channel electrodes 5353. The plurality of X channel electrodes 5351 may operate by transmitter (TX) electrodes which apply driving signals. The plurality of Y channel electrodes 5353 may operate by receiver (RX) electrodes which receive driving signals applied from the plurality of X channel electrodes 5351.

In an embodiment, some channels 5355, 5357, 1715, and 1720 among the plurality of channels constituting the digitizer panel 535 may be used to detect proximity of a charging coil (for example, the charging coil 630 of FIG. 6) of the first electronic pen 310 and/or a charging coil of the second electronic pen 1410 (or detect the state in which the first electronic pen 310 and/or the second electronic pen 1410 are mounted on the first pen seating portion 320 and/or the second pen seating portion 1310).

In an embodiment, some channels 5355 and 5357 among the plurality of channels may be allocated to a first charging circuit (for example, the first charging circuit 541 of FIG. 5) and a second charging circuit (for example, the second charging circuit 543 of FIG. 5) as indicated by reference numeral 910 and used to detect proximity of the charging coil 630 of the first electronic pen 310 and/or the charging coil of the second electronic pen 1410 (or detect the state in which the first electronic pen 310 and/or the second electronic pen 1410 are mounted on the first pen seating portion 320 and/or the second pen seating portion 1310).

For example, at least some channels, for example, first channels 5355 among the plurality of channels constituting the digitizer panel 535 may be connected to a first charging circuit (for example, the first charging circuit 541 of FIG. 5). The first charging circuit 541 may detect whether the charging coil 630 of the electronic pen 310 (or the second electronic pen 1410) is in proximity to the first charging circuit 541, based on transmission of a signal (for example, a scan signal) through the first channels 5355 of the digitizer panel 535.

In another example, at least other some channels, for example, the second channels 5357, among the plurality of channels constituting the digitizer panel 535 may be connected to a second charging circuit (for example, the second charging circuit 543 of FIG. 5). Based on transmission of a signal (for example, a scan signal) through the second channels 5357 of the digitizer panel 535, the second charging circuit 543 may detect whether the charging coil 630 of the electronic pen 310 (or the second electronic pen 1410) is in proximity to the second charging circuit 543.

In an embodiment, some other channels 1715 and 1720 among the plurality of channels may be allocated to a third charging circuit (for example, the third charging circuit 1315 of FIG. 13) and a fourth charging circuit (for example, the fourth charging circuit 1320 of FIG. 13) as indicated by reference numeral 1710 and may be used to detect proximity of the charging coil 630 of the first electronic pen 310 and/or the charging coil of the second electronic pen 1410 (or detect the state in which the first electronic pen 310 and/or the second electronic pen 1410 are mounted on the first pen seating portion 320 and/or the second pen seating portion 1310).

For example, at least some channels for example, the third channels 1715, except for the first channels 5355 and the second channels 5357, among the plurality of channels constituting the digitizer panel 535 may be connected to the third charging circuit 1315. Based on transmission of the signal (for example, the scan signal) through the third channels 1715 of the digitizer panel 535, the third charging circuit 1315 may detect whether the charging coil of the electronic pen 310 (or the second electronic pen 1410) is in proximity to the third charging circuit1315.

In another example, at least other some channels, for example, the fourth channels 1720, except for the first channels 5355 and the second channels 5357 among the plurality of channels constituting the digitizer panel 535 may be connected to the fourth charging circuit 1320. Based on transmission of the signal (for example, the scan signal) through the fourth channels 1720 of the digitizer panel 535, the fourth charging circuit 1320 may detect whether the charging coil of the electronic pen 310 (or the second electronic pen 1410) is in proximity to the fourth charging circuit 1320.

In FIGs. 5 to 17 according to various embodiments, by performing charging of the electronic pen by using the charging circuit detecting proximity of the charging coil of the electronic pen among a plurality of charging circuits and controlling the charging circuit, which did not detect proximity of the charging coil of the electronic pen, to stop transmitting the signal (for example, the scan signal), it is possible to not only reduce current consumption of the electronic device 101 and but also use some signal channels connected to the charging circuit, which did not detect proximity of the charging coil of the electronic pen, among a plurality of signal channels constituting the digitizer panel 535, for detecting an input of the electronic pen, so that accurate recognition of the electronic pen may be possible.

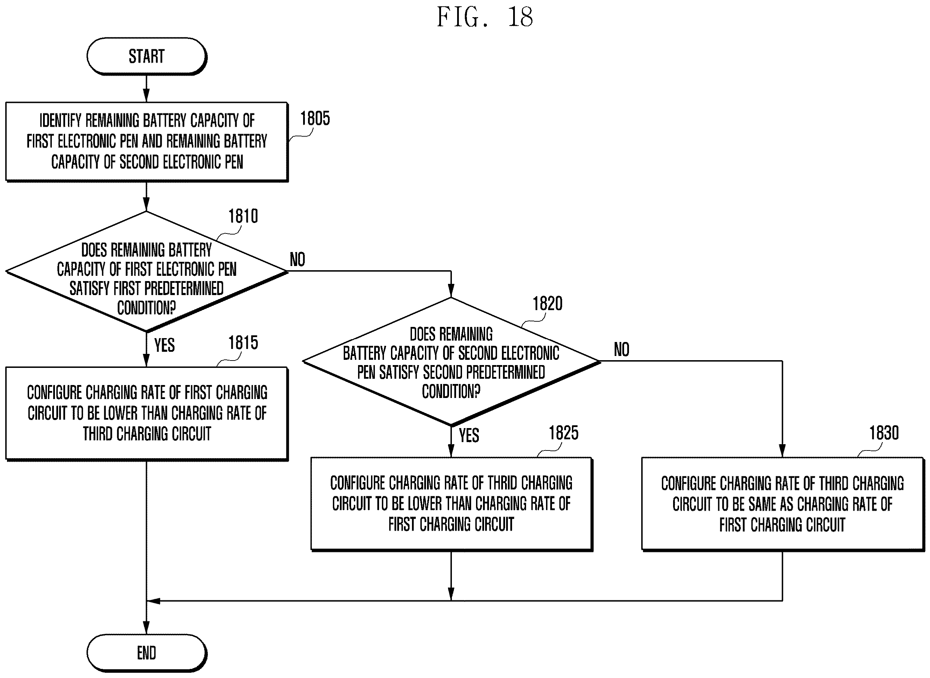

FIG. 18 is a flowchart illustrating a method of controlling charging of the first electronic pen 310 and the second electronic pen 1410 according to an embodiment of the disclosure.

In the following embodiment, respective operations may be sequentially performed but are not necessarily sequentially performed. For example, sequences of the respective operations may be changed, and at least two operations may be performed in parallel.

According to an embodiment, operation 1805 to operation 1830 may be understood as being performed by a processor (for example, the processor 550 of FIG. 5) of the electronic device (for example, the electronic device 101 of FIG. 1).

FIG. 18 according to various embodiments may be an additional operation of FIG. 16A described above. For example, in the state in which a first electronic pen (for example, the electronic pen 310 of FIGs. 3 and 4) and a second electronic pen (for example, the second electronic pen 1410 of FIG. 14) are being charged, operation 1805 described below may be performed.

Referring to FIG. 18, the processor 550 may identify the remaining capacity of the battery of the first electronic pen 310 and the remaining capacity of the battery of the second electronic pen 1410 in operation 1805. For example, the processor 550 may receive state information of the battery (for example, the battery 640 of FIG. 6) of the first electronic pen 310 from the first electronic pen 310 through a communication circuit (for example, the communication circuit 510 of FIG. 5). The state information of the battery 640 of the first electronic pen 310 may include the battery capacity of the first electronic pen 310, the remaining capacity of the battery, and/or the number of charging and discharging. Further, the processor 550 may receive battery state information of the second electronic pen 1410 from the second electronic pen 1410 through a communication circuit (for example, the communication circuit 510 of FIG. 5). The battery state information of the second electronic pen 1410 may include the battery capacity of the second electronic pen 1410, the remaining capacity of the battery, and/or the number of changing and discharging.

In an embodiment, the processor 550 may identify whether the remaining capacity of the battery of the first electronic pen 310 satisfies a first predetermined condition in operation 1810. The first predetermined condition may include a condition in which the remaining capacity of the battery of the first electronic pen 310 is higher than a value obtained by adding a first predetermined value (for example, 30%) to the remaining capacity of the battery of the second electronic pen 1410 and higher than a second predetermined value (for example, about 60%).

In an embodiment, when the remaining capacity of the battery of the first electronic pen 310 satisfies the first predetermined condition (for example, YES of operation 1810), the processor 550 may configure a charging rate of the first charging circuit (for example, the first charging circuit 541 of FIG. 5) to be lower than a charging rate of the third charging circuit (for example, the third charging circuit 1315 of FIG. 13) in operation 1815. For example, the remaining capacity of the battery of the first electronic pen 310 satisfying the first predetermined condition may mean that the remaining capacity of the battery of the first electronic pen 310 charged using power transmitted by the first charging circuit 541 is higher than the remaining capacity of the battery of the second electronic pen 1410 charged using power transmitted by the third charging circuit 1315. By configuring the charging rate of the first charging circuit 541 to be lower than the charging rate of the third charging circuit 1315, based thereon, the processor 550 may provide a larger amount of charging to the second electronic pen 1410 charged using the power transmitted by the third charging circuit 1315 than the first electronic pen 310 charged using the power transmitted by the first charging circuit 541.

In an embodiment, when the remaining capacity of the battery of the first electronic pen 310 satisfies the first predetermined condition, the charging rate of the first charging circuit 541 may be about 25%, and the charging rate of the third charging circuit 1315 may be about 75%. However, the disclosure is not limited thereto.

In an embodiment, when the remaining capacity of the battery of the first electronic pen 310 does not satisfy the first predetermined condition (for example, NO of operation 1810), the processor 550 may identify whether the remaining capacity of the battery of the second electronic pen 1410 satisfies a second predetermined condition in operation 1820. The second predetermined condition may include a condition in which the remaining capacity of the battery of the second electronic pen 1410 is higher than a value obtained by adding a first predetermined value (for example, 30%) to the remaining capacity of the battery of the first electronic pen 310 and higher than a second predetermined value (for example, about 60%).

In an embodiment, when the remaining capacity of the battery of the second electronic pen 1410 satisfies the second predetermined condition (for example, YES of operation 1820), the processor 550 may configure the charging rate of the third charging circuit 1315 to be lower than the charging rate of the first charging circuit 541 in operation 1825. For example, the remaining capacity of the battery of the second electronic pen 1410 satisfying the second predetermined condition may mean that the remaining capacity of the battery of the second electronic pen 1410 charged using power transmitted by the third charging circuit 1315 is higher than the remaining capacity of the battery of the first electronic pen 310 charged using power transmitted by the first charging circuit 541. By configuring the charging rate of the third charging circuit 1315 to be lower than the charging rate of the first charging circuit 541, based thereon, the processor 550 may provide a larger amount of charging to the first electronic pen 310 charged using the power transmitted by the first charging circuit 541 than the second electronic pen 1410 charged using the power transmitted by the third charging circuit 1315.

In an embodiment, when the remaining capacity of the battery of the second electronic pen 1410 satisfies the second predetermined condition, the charging rate of the first charging circuit 541 may be about 75%, and the charging rate of the third charging circuit 1315 may be about 25%. However, the disclosure is not limited thereto.

In an embodiment, when the reaming capacity of the battery of the second electronic pen 1410 does not satisfy the second predetermined condition (for example, NO of operation 1820), the processor 550 may configure the charging rate of the first charging circuit 541 to be the same as the charging rate of the third charging circuit 1315 in operation 1830. For example, the remaining capacity of the battery of the first electronic pen 310, not satisfying the first predetermined condition, and the remaining capacity of the battery of the second electronic pen 1410, not satisfying the second predetermined condition, may mean that the remaining capacity of the battery of the first electronic pen 310 charged using the power transmitted by the first charging circuit 541 and the remaining capacity of the battery of the second electronic pen 1410 charged using the power transmitted by the third charging circuit 1315 are the same as each other or a difference between the remaining capacity of the battery of first electronic pen 310 and the remaining capacity of the battery of the second electronic pen 1410 is included within a predetermined range. By configuring the charging rate of the first charging circuit 541 to be the same as the charging rate of the third charging circuit 1315, based thereon, the processor 550 may provide the same amount of charging to the first electronic pen 310 charged using the power transmitted by the first charging circuit 541 and the second electronic pen 1410 charged using the power transmitted by the third charging circuit 1315.

In an embodiment, when the remaining capacity of the battery of the first electronic pen 310 does not satisfy the first predetermined condition and the remaining capacity of the battery of the second electronic pen 1410 does not satisfy the second predetermined condition, the charging rate of the first charging circuit 541 may be about 50% and the charging rate of the third charging circuit 1315 may be about 50%. However, the disclosure is not limited thereto.

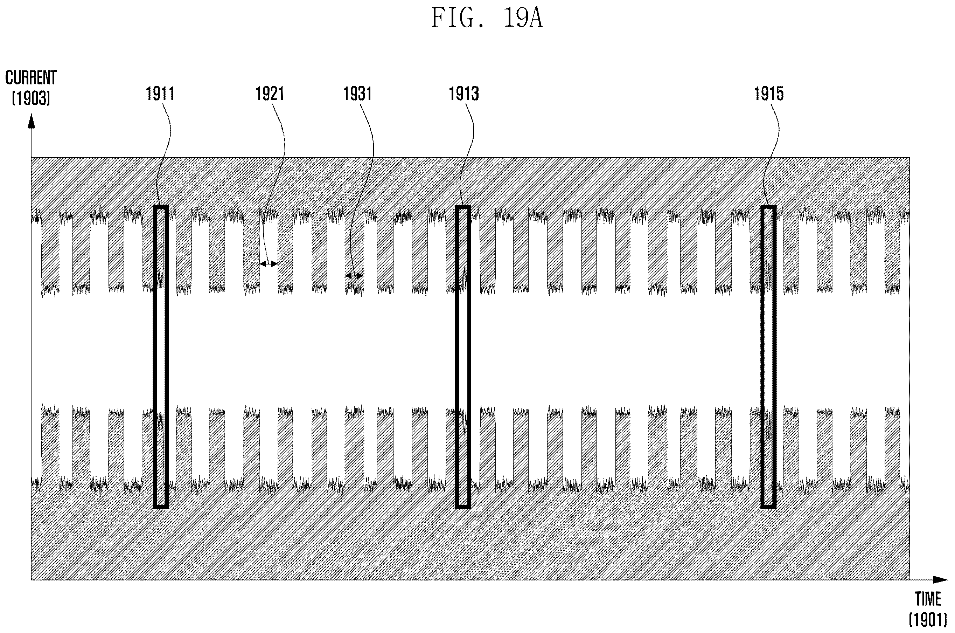

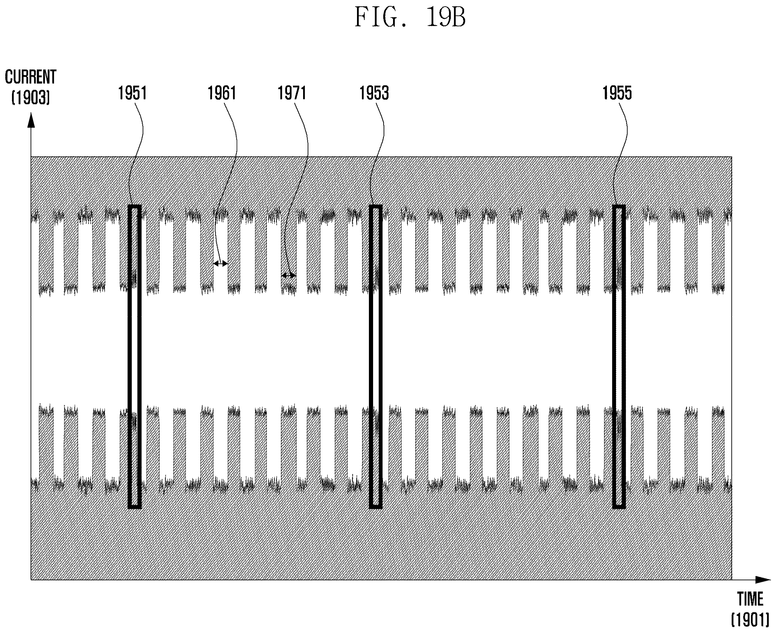

FIGs. 19A and 19B are graphs illustrating the current according to the charging control of the first electronic pen 310 and the second electronic pen 1410 according to an embodiment of the disclosure.

FIG. 19A according to various embodiments is a graph illustrating a Tx/Rx switching frequency of the first charging circuit 541 when a charging rate of a first charging circuit (for example, the first charging circuit 541 of FIG. 5) is configured to be lower than a charging rate of a third charging circuit (for example, the third charging circuit 1315 of FIG. 13) as the remaining capacity of the battery of a first electronic pen (for example, the electronic pen 310 of FIGs. 3 and 4) illustrated in FIG. 18 described above satisfies a first predetermined condition.

FIG. 19B according to various embodiments is a graph illustrating a Tx/Rx switching frequency of the third charging circuit 1315 when a charging rate of a first charging circuit (for example, the first charging circuit 541 of FIG. 5) is configured to be lower than a charging rate of a third charging circuit (for example, the third charging circuit 1315 of FIG. 13) as the remaining capacity of the battery of a first electronic pen (for example, the electronic pen 310 of FIGs. 3 and 4) illustrated in FIG. 18 described above satisfies a first predetermined condition.

In FIGs. 19A and 19B according to an embodiment, the x axis may indicate a time 1901 and the y axis may indicate a current value (mA) 1903.

Referring to FIGs. 19A and 19B, the first charging circuit 541 and the third charging circuit 1315 may transmit signals 1911, 1913, 1915, 1951, 1953, and 1955 at predetermined time intervals.

In an embodiment, when the remaining capacity of the battery of the first electronic pen 310 satisfies the first predetermined condition, intervals 1921 and 1931 at which the first charging circuit 541 wirelessly transmits power to the first electronic pen 310 may be larger than intervals 1961 and 1971 at which the third charging circuit 1315 wirelessly transmits power to a second electronic pen (for example, the second electronic pen 1410 of FIG. 14) as the charging rate of the first charging circuit 541 is configured to be lower than the charging rate of the third charging circuit 1315. The intervals 1921 and 1931 at which the first charging circuit 541 wirelessly transmits power to the first electronic pen 310, being larger than the intervals 1961 and 1971 at which the third charging circuit 1315 wirelessly transmits power to the second electronic pen 1410 may mean that a Tx/Rx switching frequency of the first charging circuit 541 is smaller than a Tx/Rx switching frequency of the third charging circuit 1315. As the Tx/Rx switching frequency of the first charging circuit 541 is smaller than the Tx/Rx switching frequency of the third charging circuit 1315, a larger amount of charging may be provided to the second electronic pen 1410 charged using the power transmitted by the third charging circuit 1315 than the first electronic pen 310 charged using the power transmitted by the first charging circuit 541.

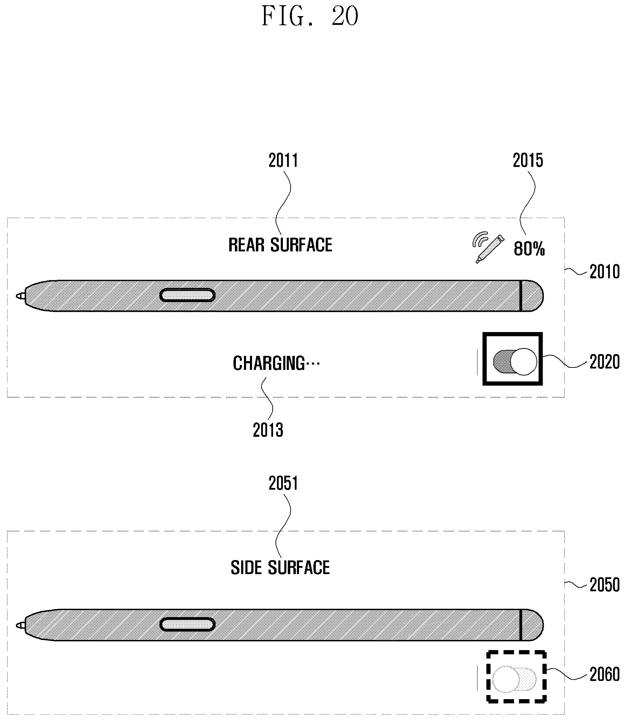

FIG. 20 is a diagram illustrating a user interface which configures whether to charge the first electronic pen 310 and the second electronic pen 1410 according to an embodiment of the disclosure.

Referring to FIG. 20, a processor (for example, the processor 550 of FIG. 5) may display, on a display (for example, the display 531 of FIG. 5), a user interface which configures activation or deactivation of a charging circuit (for example, a first charging circuit (for example, the first charging circuit 541 of FIG. 5), a second charging circuit (for example, the second charging circuit 543 of FIG. 5), a third charging circuit (for example, the third charging circuit 1315 of FIG. 13), and a fourth charging circuit (for example, the fourth charging circuit 1320 of FIG. 13)) for charging the battery of a first electronic pen (for example, the electronic pen 310 of FIGs. 3 and 4) and the battery of a second electronic pen (for example, the second electronic pen 1410 of FIG. 14).

In an embodiment, the user interface may include information 2010 related to the first charging circuit 541 and the second charging circuit 543 and information 2050 related to the third charging circuit 1315 and the fourth charging circuit 1320.

For example, the information 2010 related to the first charging circuit 541 and the second charging circuit 543 may include location information 2011 (for example, the rear surface) of the first charging circuit 541 and the second charging circuit 543, information 2013 (for example, charging) related to a charging state of the electronic pen (for example, the first electronic pen 310 or the second electronic pen 1410) according to detection of the electronic pen (for example, the first electronic pen 310 or the second electronic pen 1410) through the first charging circuit 541 or the second charging circuit 543, battery information 2015 (for example, 80%) according to charging of the electronic pen (for example, the first electronic pen 310 or the second electronic pen 1410), or an item 2020 for configuration activation or deactivation of the first charging circuit 541 and the second charging circuit 543.

For example, the information 2050 related to the third charging circuit 1315 and the fourth charging circuit 1320 may include location information 2051 (for example, side surface) of the third charging circuit 1315 and the fourth charging circuit 1320 and an item 2060 for configuring activation or deactivation of the third charging circuit 1315 and the fourth charging circuit 1320. The disclosure is not limited to, and when the electronic pen (for example, the first electronic pen 310 or the second electronic pen 1410) is detected through the third charging circuit 1315 or the fourth charging circuit 1320, the information 2050 related to the third charging circuit 1315 and the fourth charging circuit 1320 may further include information related to the charging state of the electronic pen (for example, the first electronic pen 310 or the second electronic pen 1410) and/or battery information according to charging of the electronic pen (for example, the first electronic pen 310 or the second electronic pen 1410).

In various embodiments, when an electronic device (for example, the electronic device 101 of FIG. 1) has two pen seating portions (for example, a first pen seating portion (for example, the pen seating portion 320 of FIG. 4) and a second pen seating portion (for example, the second pen seating portion 1310 of FIG. 13)) but charges only one electronic pen, the electronic device may activate, through the above-described user interface, a charging circuit disposed in an internal space of the electronic device 101 to correspond to a pen seating portion to be used and deactivate a charging circuit disposed in an internal space of the electronic device 101 to correspond to a pen seating portion to be not used. By transmitting a signal (for example, a signal for detecting proximity or removal of the charging coil of the electronic pen) using only the activated charging circuit, it is possible to increase the charging efficiency of the electronic pen, compared to charging the electronic pen at a charging rate allocated to each charging circuit by using first to fourth charging circuits. Further, by not transmitting a signal (for example, a signal for detecting proximity of the charging coil of the electronic pen) through the deactivated charging circuit, it is possible to block the occurrence of unnecessary noise and detect an input of the electronic pen on a digitizer panel (for example, the digitizer panel 535 of FIG. 5) through channels connected to the deactivated charging circuit, thereby also increasing the recognition accuracy of the electronic pen.

A method of charging an electronic pen 310 by the electronic device 101 according to an embodiment of the disclosure may include an operation of transmitting a signal for detecting proximity of a charging coil 630 of an electronic pen 310 through a first charging circuit 541 and a second charging circuit 543. According to an embodiment, the method of charging the electronic pen 310 by the electronic device 101 may include an operation of identifying one charging circuit detecting the proximity of the charging coil 630 of the electronic pen 310 among the first charging circuit 541 and the second charging circuit 543. According to an embodiment, the method of charging the electronic pen 310 by the electronic device 101 may include an operation of wirelessly transmitting power to the electronic pen 310 through the one identified charging circuit detecting the proximity of the charging coil 630. According to an embodiment, the method of charging the electronic pen 310 by the electronic device 101 may include an operation of controlling the other charging circuit among the first charging circuit 541 and the second charging circuit 543 to stop transmitting the signal while wirelessly transmitting the power to the electronic pen 310 through the one identified charging circuit detecting the proximity of the charging coil 630.

In an embodiment, the first charging circuit 541 may be connected to first channels among a plurality of channels included in a digitizer panel 535.

In an embodiment, the second charging circuit 543 may be connected to second channels among the plurality of channels included in the digitizer panel 535.

According to an embodiment, the method of charging the electronic pen 310 by the electronic device 101 may further include an operation of transmitting the signal for detecting the proximity of the charging coil 630 of the electronic pen 310 at predetermined time intervals in a state in which the power is wirelessly transmitted to the electronic pen 310 through the one identified charging circuit.

According to an embodiment, the method of charging the electronic pen 310 by the electronic device 101 may further include an operation of, when the proximity of the charging coil 630 of the electronic pen 310 is not detected while the signal for detecting the proximity of the charging coil 630 of the electronic pen 310 is transmitted at predetermined time intervals, controlling the other charging circuit to resume transmission of the signal for detecting the proximity of the charging coil 630 of the electronic pen 310.

In an embodiment, a rear plate 211 of the electronic device 101 may include a pen seating portion 320 provided to make mounting of the electronic pen 310 in at least a partial area possible.

In an embodiment, the first charging circuit 541 may be disposed at a location physically adjacent to the charging coil 630 of the electronic pen 310 when a pen tip 312 of the electronic pen 310 is mounted on the pen seating portion 320 to face a first direction.

In an embodiment, the second charging circuit 543 may be disposed at a location physically adjacent to the charging coil 630 of the electronic pen 310 when the pen tip 312 of the electronic pen 310 is mounted on the pen seating portion 320 to face a second direction corresponding to a direction opposite to the first direction.

In an embodiment, a side member 218 of the electronic device 101 may include a second pen seating portion 1310 provided to make mounting of a second electronic pen 1410 in at least a partial area possible.

In an embodiment, a third charging circuit 1315 may be disposed at a location physically adjacent to a second charging coil of the second electronic pen 1410 when a pen tip of the second electronic pen 1410 is mounted on the second pen seating portion 1310 to face the first direction.

In an embodiment, a fourth charging circuit 1320 may be disposed at a location physically adjacent to a second charging coil of the second electronic pen 1410 when the pen tip of the second electronic pen 1410 is mounted on the second pen seating portion 1310 to face the second direction corresponding to the direction opposite to the first direction.

In an embodiment, the third charging circuit 1315 may be connected to third channels among the plurality of signal channels included in the digitizer panel 535.

In an embodiment, the fourth charging circuit 1320 may be connected to fourth channels among the plurality of signal channels included in the digitizer panel 535.

According to an embodiment, the method of charging the electronic pen 310 by the electronic device 101 may include an operation of transmitting a signal for detecting proximity of the second charging coil of the second electronic pen 1410 through the third charging circuit 1315 and the fourth charging circuit 1320. According to an embodiment, the method of charging the electronic pen 310 by the electronic device 101 may include an operation of identifying one charging circuit detecting the proximity of the second charging coil of the second electronic pen 1410 among the third charging circuit 1315 and the fourth charging circuit 1320. According to an embodiment, the method of charging the electronic pen 310 by the electronic device 101 may include an operation of wirelessly transmitting the power to the second electronic pen 1410 through the one charging circuit detecting the proximity of the second charging coil of the second electronic pen 1410. According to an embodiment, the method of charging the electronic pen 310 by the electronic device 101 may further include an operation of controlling the other charging circuit among the third charging circuit 1315 and the fourth charging circuit 1320 to stop transmitting the signal while wirelessly transmitting the power to the second electronic pen 1410 through the one charging circuit detecting the proximity of the second charging coil of the second electronic pen 1410.

According to an embodiment, the method of charging the electronic pen 310 by the electronic device 101 may include an operation of identifying a first remaining battery capacity of the electronic pen 310 and a second remaining battery capacity of the second electronic pen 1410. According to an embodiment, the method of charging the electronic pen 310 by the electronic device 101 may further include an operation of, based on the first remaining battery capacity and the second remaining battery capacity, adjusting a charging rate of a charging circuit wirelessly transmitting power to the electronic pen 310 and a charging rate of a charging circuit wirelessly transmitting power to the second electronic pen 1410.

A non-transitory computer-readable recording medium (computer-readable medium) storing instructions that, when executed by a processor 550 of an electronic device 101 according to an embodiment of the disclosure, cause the processor 550 to perform operations may execute an operation of transmitting a signal for detecting proximity of a charging coil 630 of an electronic pen 310 through a first charging circuit 541 and a second charging circuit 543. According to an embodiment, the non-transitory computer-readable recording medium (computer-readable medium) storing instructions that, when executed by the processor 550 of the electronic device 101, cause the processor 550 to perform operations may execute an operation of identify one charging circuit detecting the proximity of the charging coil 630 of the electronic pen 310 among the first charging circuit 541 and the second charging circuit 543. According to an embodiment, the non-transitory computer-readable recording medium (computer-readable medium) storing instructions that, when executed by the processor 550 of the electronic device 101, cause the processor 550 to perform operations may execute an operation of wirelessly transmit power to the electronic pen 310 through the one identified charging circuit. According to an embodiment, the non-transitory computer-readable recording medium (computer-readable medium) storing instructions that, when executed by the processor 550 of the electronic device 101, cause the processor 550 to perform operations may execute an operation of controlling the other charging circuit among the first charging circuit 541 and the second charging circuit 543 to stop transmitting the signal while wirelessly transmitting the power to the electronic pen 310 through the one identified charging circuit.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively," as "coupled with," "coupled to," "connected with," or "connected to" another element (e.g., a second element), it means that the element may be coupled with the other element directly (e.g., through wires), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry." A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
a first charging circuit (541);
a second charging circuit (543);
memory (520) storing instructions; and
a processor (550),
wherein the instructions, when executed by the processor (550), cause the electronic device (101) to:
transmit a signal for detecting proximity of a charging coil (630) of an electronic pen (310) through the first charging circuit (541) and the second charging circuit (543);
identify one charging circuit detecting the proximity of the charging coil (630) of the electronic pen (310) among the first charging circuit (541) and the second charging circuit (543);
wirelessly transmit power to the electronic pen (310) through the identified one charging circuit; and
control the other charging circuit among the first charging circuit (541) and the second charging circuit (543) stop transmitting the signal while wirelessly transmitting the power to the electronic pen (310) through the identified one charging circuit.

2. The electronic device of claim 1, further comprising a digitizer panel (535) comprising a plurality of channels,
wherein the first charging circuit (541) is connected to first channels among the plurality of channels,
wherein the second charging circuit (543) is connected to second channels among the plurality of channels, and
wherein the identified one charging circuit is configured to transmit the signal for detecting the proximity of the charging coil (630) of the electronic pen (310) at predetermined time intervals in a state in which the power is wirelessly transmitted to the electronic pen (310).

3. The electronic device of claim 1 or 2, wherein the instructions, when executed by the processor (550), cause the electronic device (101) to, when the proximity of the charging coil (630) of the electronic pen (310) is not detected while the signal for detecting the proximity of the charging coil (630) of the electronic pen (310) is transmitted at predetermined time intervals, control the other charging circuit resume transmission of the signal for detecting the proximity of the charging coil (630) of the electronic pen (310).

4. The electronic device of any of claims 1 to 3, further comprising:
a front plate (202);
a rear plate (211); and
a side member (218) surrounding an internal space between the front plate (202) and the rear plate (211),
wherein the rear plate (211) comprises a pen seating portion (320) for mounting of the electronic pen (310) in at least a partial area,
wherein the first charging circuit (541) is disposed at a location physically adjacent to the charging coil (630) of the electronic pen (310) when a pen tip (312) of the electronic pen (310) is mounted on the pen seating portion (320) to face a first direction, and
wherein the second charging circuit (543) is disposed at a location physically adjacent to the charging coil (630) of the electronic pen (310) when the pen tip (312) of the electronic pen (310) is mounted on the pen seating portion (320) to face a second direction corresponding to a direction opposite to the first direction.

5. The electronic device of claim 4, further comprising:
a third charging circuit (1315); and
a fourth charging circuit (1320),
wherein the side member (218) comprises a second pen seating portion (1310) for mounting of a second electronic pen (1410) in at least a partial area,
wherein the third charging circuit (1315) is disposed at a location physically adjacent to a second charging coil of the second electronic pen (1410) when a pen tip of the second electronic pen (1410) is mounted on the second pen seating portion (1310) to face the first direction,
wherein the fourth charging circuit (1320) is disposed at a location physically adjacent to a second charging coil of the second electronic pen (1410) when the pen tip of the second electronic pen (1410) is mounted on the second pen seating portion (1310) to face the second direction corresponding to the direction opposite to the first direction,
wherein the third charging circuit (1315) is connected to the third channels among the plurality of signal channels included in the digitizer panel (535), and
wherein the fourth charging circuit (1320) is connected to the fourth channels among the plurality of signal channels included in the digitizer panel (535).

6. The electronic device of claim 5, wherein the instructions, when executed by the processor (550), cause the electronic device (101) to:
transmit a signal for detecting proximity of the second charging coil of the second electronic pen (1410) through the third charging circuit (1315) and the fourth charging circuit (1320);
identify one charging circuit detecting the proximity of the second charging coil of the second electronic pen (1410) among the third charging circuit (1315) and the fourth charging circuit (1320);
wirelessly transmit power to the second electronic pen (1410) through the identified one charging circuit detecting the proximity of the second charging coil of the second electronic pen (1410); and
control the other charging circuit among the third charging circuit (1315) and the fourth charging circuit (1320) stop transmitting the signal while the power is wirelessly transmitted to the second electronic pen (1410) through the identified one charging circuit.

7. The electronic device of claim 6, wherein the instructions are configured to, when executed by the processor (550), cause the electronic device (101) to:
identify a first remaining battery capacity of the electronic pen (310) and a second remaining battery capacity of the second electronic pen (1410); and
based on the first remaining battery capacity and the second remaining battery capacity, adjust a charging rate of a charging circuit wirelessly transmitting power to the electronic pen (310) and a charging rate of a charging circuit wirelessly transmitting power to the second electronic pen (1410).

8. A method of charging an electronic pen by an electronic device (101), the method comprising:
transmitting a signal for detecting proximity of a charging coil (630) of an electronic pen (310) through a first charging circuit (541) and a second charging circuit (543);
identifying one charging circuit detecting the proximity of the charging coil (630) of the electronic pen (310) among the first charging circuit (541) and the second charging circuit (543);
wirelessly transmitting power to the electronic pen (310) through the identified one charging circuit; and
controlling the other charging circuit among the first charging circuit (541) and the second charging circuit (543) to stop transmitting the signal while wirelessly transmitting the power to the electronic pen (310) through the identified one charging circuit.

9. The method of claim 8, wherein the first charging circuit (541) is connected to first channels among a plurality of channels included in a digitizer panel (535), and
wherein the second charging circuit (543) is connected to second channels among the plurality of channels included in the digitizer panel (535).

10. The method of claim 8 or 9, further comprising:
transmitting the signal for detecting the proximity of the charging coil (630) of the electronic pen (310) at predetermined time intervals in a state in which the power is wirelessly transmitted to the electronic pen (310) through the identified one charging circuit; and
when the proximity of the charging coil (630) of the electronic pen (310) is not detected while the signal for detecting the proximity of the charging coil (630) of the electronic pen (310) is transmitted at predetermined time intervals, controlling the other charging circuit to resume transmission of the signal for detecting the proximity of the charging coil (630) of the electronic pen (310).

11. The method of any of claims 8 to 10, wherein a rear plate (211) of the electronic device (101) comprises a pen seating portion (320) for mounting of the electronic pen (310) in at least a partial area,
wherein the first charging circuit (541) is disposed at a location physically adjacent to the charging coil (630) of the electronic pen (310) when a pen tip (312) of the electronic pen (310) is mounted on the pen seating portion (320) to face a first direction, and
wherein the second charging circuit (543) is disposed at a location physically adjacent to the charging coil (630) of the electronic pen (310) when the pen tip (312) of the electronic pen (310) is mounted on the pen seating portion (320) to face a second direction corresponding to a direction opposite to the first direction.

12. The method of claim 11, wherein a side member (218) of the electronic device (101) comprises a second pen seating portion (1310) for mounting of a second electronic pen (1410) in at least a partial area,
wherein a third charging circuit (1315) is disposed at a location physically adjacent to a second charging coil of the second electronic pen (1410) when a pen tip of the second electronic pen (1410) is mounted on the second pen seating portion (1310) to face the first direction,
wherein a fourth charging circuit (1320) is disposed at a location physically adjacent to a second charging coil of the second electronic pen (1410) when the pen tip of the second electronic pen (1410) is mounted on the second pen seating portion (1310) to face the second direction corresponding to the direction opposite to the first direction,
wherein the third charging circuit (1315) is connected to third channels among the plurality of signal channels included in the digitizer panel (535), and
wherein the fourth charging circuit (1320) is connected to fourth channels among the plurality of signal channels included in the digitizer panel (535).

13. The method of claim 12, further comprising:
transmitting a signal for detecting proximity of the second charging coil of the second electronic pen (1410) through the third charging circuit (1315) and the fourth charging circuit (1320);
identifying one charging circuit detecting the proximity of the second charging coil of the second electronic pen (1410) among the third charging circuit (1315) and the fourth charging circuit (1320);
wirelessly transmitting the power to the second electronic pen (1410) through the identified one charging circuit detecting the proximity of the second charging coil of the second electronic pen (1410) while wirelessly transmitting the power to the second electronic pen through the one charging circuit; and
controlling the other charging circuit among the third charging circuit (1315) and the fourth charging circuit (1320) to stop transmitting the signal.

14. The method of claim 13, further comprising:
identifying a first remaining battery capacity of the electronic pen (310) and a second remaining battery capacity of the second electronic pen (1410); and
based on the first remaining battery capacity and the second remaining battery capacity, adjusting a charging rate of a charging circuit wirelessly transmitting power to the electronic pen (310) and a charging rate of a charging circuit wirelessly transmitting power to the second electronic pen (1410).

15. A non-transitory computer-readable recording medium (computer-readable medium) storing instructions causing, when executed by a processor (550) of an electronic device (101), the processor (550) to:
transmit a signal for detecting proximity of a charging coil (630) of an electronic pen (310) through a first charging circuit (541) and a second charging circuit (543);
identify one charging circuit detecting the proximity of the charging coil (630) of the electronic pen (310) among the first charging circuit (541) and the second charging circuit (543);
wirelessly transmit power to the electronic pen (310) through the identified one charging circuit; and
controlling the other charging circuit among the first charging circuit (541) and the second charging circuit (543) to stop transmitting the signal while wirelessly transmitting the power to the electronic pen (310) through the identified one charging circuit.
